# EUROPEAN PATENT APPLICATION

(11) **EP 4 512 561 A1**
(43) Date of publication of application: **26.02.2025**
(21) Application number: 23791641.6
(22) Date of filing: 30.03.2023
(51) Int. Cl.: B23K 9/12, B23K 9/127, B23K 9/173, G05B 19/4093

(54) **CONTROL METHOD, CONTROL DEVICE, WELDING SYSTEM, CONTROL PROGRAM, AND WELDING METHOD**

(30) Priority: 22.04.2022 JP 2022071120
(71) Applicant: KABUSHIKI KAISHA KOBE SEIKO SHO (KOBE STEEL, LTD.), Hyogo 651-8585 (JP)
(72) Inventor: MIWA Tsuyoshi, Kanagawa 251-8551 (JP); MANIWA Hirofumi, Kanagawa 251-8551 (JP)
(74) Representative: Müller-Boré & Partner Patentanwälte PartG mbB
(86) International application number: PCT/JP2023/013445
(87) International publication number: WO 2023/203989

(57) **Abstract**

Provided is a control method with which it is possible to achieve exceptional welding quality even using a GMAW method having high welding efficiency in welding when a groove is provided in a material being welded, the compositions of the material being welded and a welding wire are different from one another, and the welding wire used contains 5% or more of Ni. A method for controlling a welding robot or a control device relating to GMAW when a groove is provided in a material being welded, the compositions of the material being welded and a welding wire are different from one another, and the welding wire contains 5% or more of Ni, the method having: an execution information setting step for setting execution information that includes at least one from among the plate thickness, the groove depth, and the estimated welding metal height, as well as at least one from among the gap size and the groove width in a central position at a layer height calculated in advance; and a welding condition setting/correction step for calculating a weaving width before or during welding on the basis of the execution information and setting or correcting welding conditions including at least the weaving width.

## Description

### Technical Field

The present disclosure relates to a control method, a control device, a welding system, a control program, and a welding method.

### Background Art

In recent years, liquefied natural gas (hereinafter also referred to as "LNG") is attracting attention as clean fuel, and the amount of production, and the amount of use are increasing. Due to increase in demand, a large capacity and a short production time are required for a tank (hereinafter also referred to as "LNG tank") that stores the LNG. However, naturally, a large-capacity LNG tank needs a huge amount of welding. In addition, a ground LNG tank typically has a double structure having an inner tank and an outer tank made of metal. In general, for welding an inner tank, as a workpiece (hereinafter also referred to as a "base material", a "work" or simply a "steel sheet"), a steel sheet of 9% Ni steel is used, and as a welding material (hereinafter also referred to as a "welding wire"), Ni-based alloy welding material which can ensure toughness and strength comparable to those of the base material is used. Although the steel sheet used for an inner tank is a typically 9% Ni steel, due to demand of reduction in the amount of Ni in recent years, a steel sheet containing Ni in a range of 5 to 12% is a target steel sheet used for the inner tank material.

Welding of an inner tank is extremely difficult because a steel sheet and a welding material are different in various physical properties due to the difference in composition, thus a high welding technique is required. Thus, for welding of an inner tank which requires excellent welding quality, a skilled welding worker needs to carefully perform welding manually, thus the welding work efficiency decreases. As described above, because of decreased welding work efficiency in addition to an enormous amount of welding due to larger capacity, manufacturing of an LNG tank takes a longer production time for a larger capacity. Thus, as a solution to achieve larger capacity and a short production time, improvement of the welding work efficiency has been called for in the past.

To improve the welding work efficiency, automatic welding provides a powerful solution, thus automatic welding has been discussed and applied to welding of the inner tank of LNG tank. For example, PTL 1 provides a method for manufacturing an inner tank side plate of a flat cylindrical tank efficiently in a short production time by utilizing a mobile scaffold device and an automatic control device as needed, and discloses that in a vertical welding process for the inner tank, an automatic control device for gas shield arc welding using a wire containing flux is applied, and in a horizontal welding process, an automatic control device for submerged arc welding is applied.

### Citation List

### Patent Literature

PTL 1: Japanese Unexamined Patent Application Publication No. 2018-3461

### Summary of Invention

### Technical Problem

In the past, automatic welding by GTAW (Gas Tungsten Arc Welding) has been used in addition to the automatic welding by GMAW (Gas metal arc welding), SAW (Submerged Arc Welding) described in PTL 1. However, as described above, due to the difference in composition of the steel sheet and the welding material for welding of an inner tank, welding is extremely difficult, and a high welding technique is required.

For example, the melting point of Ni-based alloy serving as a welding material is lower than the melting point of 9% Ni steel by 100°C or more. As a result, welding quality deterioration such as sagging of a fusion zone, poor bead appearance, or insufficient penetration at the groove causing incomplete fusion may occur. Thus, when various welding methods are automated, it is necessary to consider decreasing the welding work efficiency such as reducing the welding speed to ensure high quality welding.

In the automatic welding, it is not possible to achieve optimization of the welding conditions, such as adjustment of bead elongation (hereinafter also referred to as "weaving"), and adjustment of the welding speed depending on the welding situation as in manual welding and semi-automatic welding, and selection of a welding condition is extremely difficult, thus welding quality deterioration due to unselected welding condition may occur. PTL 1 has not stated anything about achievement of ensuring an excellent welding quality and improving the welding efficiency at the same time. In particular, the welding quality is not considered. GMAW is a welding method that is superior to SAW and GTAW in deposition efficiency regardless of the welding position; however, in order to ensure excellent welding quality while maintaining an excellent deposition efficiency, high welding skill is required, thus practically, at the site of welding, actual situation is that a welding worker performs semi-automatic welding particularly for welding in a difficult position such as in vertical welding.

Like this, the factor that makes automation difficult in GMAW having a high welding work efficiency is the difficulty of welding work due to the difference in physical property between the steel sheet and the welding material. Thus, the fundamental problem is that the steel sheet and the welding material are different in physical property, in other words, the steel sheet and the welding material are different in composition. The welding wire tends to have a lower melting point for a higher Ni content, and when a welding wire containing 5% or more of Ni is used, this problem is evident. Thus, even when the steel sheet and the welding material are different in composition, and the welding wire contains 5% or more of Ni, automatic welding ensuring excellent welding quality is desired to be achieved. Note that the application includes welding of a liquefied ethylene gas tank (hereinafter also referred to as an "LEG tank") and a liquefied CO₂ tank, in addition to the above-mentioned welding of an LNG tank, and in each application, a welding wire containing 5% or more of Ni may be used. In a combination of different base metals, such as a case where the steel sheet is Fe based and the welding material is Ni based, the difference in physical property between the steel sheet and the welding material is greater, thus the problem is difficult to solve. A further difficult problem arises in a combination of a steel sheet containing 5 to 12% Ni, and a welding material of Ni steel or Ni-based alloy containing Ni greater in amount than the steel sheet under the assumption of welding of an LEG tank, an LNG tank; however, naturally, the problem in each application is to be solved by the present invention.

Thus, in consideration of the above-mentioned problem, it is an object of the present invention to provide a control method, a control device, a welding system, a control program, and a welding method that are capable of achieving an excellent welding quality in welding when a workpiece is provided with a groove, the workpiece and the welding wire are different in composition, and the welding wire contains 5% or more of Ni even with use of a GMAW method having a high deposition efficiency.

### Solution to Problem

Therefore, the above-mentioned object of the present invention is achieved by the configuration of [1] stated below.
[1] A control method for a welding robot or a control device related to GMAW in which a workpiece is provided with a groove, the workpiece and a welding wire are different in composition, and the welding wire contains 5% or more of Ni, the method comprising:
   a work information setting process of setting work information including at least one of a plate thickness, a groove depth or an estimated welding metal height, and at least one of a gap or a groove width at a central position of a pre-calculated layer height; and
   a welding condition setting correction process of calculating a weaving width based on the work information before welding or during welding, and setting or correcting welding conditions including at least the weaving width.
   The above-mentioned object of the present invention is achieved by the configuration of [2] stated below.
[2] A control device for controlling a welding robot related to GMAW in which a workpiece is provided with a groove, the workpiece and a welding wire are different in composition, and the welding wire contains 5% or more of Ni, the control device comprising:
   a work information setting function of setting work information including at least one of a plate thickness, a groove depth or an estimated welding metal height, and at least one of a gap or a groove width at a central position of a pre-calculated layer height; and
   a welding condition setting correction function of calculating a weaving width based on the work information before welding or during welding, and setting or correcting welding conditions including at least the weaving width.
   The above-mentioned object of the present invention is achieved by the configuration of [3] stated below.
[3] A welding system for controlling a welding robot related to GMAW in which a workpiece is provided with a groove, the workpiece and a welding wire are different in composition, and the welding wire contains 5% or more of Ni, the welding system comprising
   at least a control device and a welding power supply,
   wherein the control device comprises:
      a work information setting function of setting work information including at least one of a plate thickness, a groove depth or an estimated welding metal height, and at least one of a gap or a groove width at a central position of a pre-calculated layer height; and
      a welding condition setting correction function of calculating a weaving width based on the work information before welding or during welding, and setting or correcting welding conditions including at least the weaving width.
      The above-mentioned object of the present invention is achieved by the configuration of [4] stated below.
[4] A control program for controlling a welding robot related to GMAW in which a workpiece is provided with a groove, the workpiece and a welding wire are different in composition, and the welding wire contains 5% or more of Ni, the control program comprising:
   a work information setting function of setting work information including at least one of a plate thickness, a groove depth or an estimated welding metal height, and at least one of a gap or a groove width at a central position of a pre-calculated layer height; and
   a welding condition setting correction function of calculating a weaving width based on the work information before welding or during welding, and setting or correcting welding conditions including at least the weaving width.
   The above-mentioned object of the present invention is achieved by the configuration of [5] stated below.
[5] A welding method related to GMAW in which a workpiece is provided with a groove, the workpiece and a welding wire are different in composition, and the welding wire contains 5% or more of Ni, the welding method comprising:
   a work information setting process of setting work information including at least one of a plate thickness, a groove depth or an estimated welding metal height, and at least one of a gap or a groove width at a central position of a pre-calculated layer height; and
   a welding condition setting correction process of calculating a weaving width based on the work information before welding or during welding, and setting or correcting welding conditions including at least the weaving width,
   wherein in the welding condition setting correction process,
   when a value of the gap or a value of the groove width at the central position of the pre-calculated layer height is smaller than a wire diameter of the welding wire, a weaving width is calculated based on a pre-set value, and
   when the value of the gap or the value of the groove width at the central position of the pre-calculated layer height is larger than the wire diameter of the welding wire, the weaving width is calculated so that W/G is lower than or equal to a first value and higher than or equal to a second value, the W/G being a ratio of W indicating the weaving width to G indicating the value of the gap or the value of the groove width at the central position of the pre-calculated layer height,
   where the first value and the second value are values based on the groove depth, the estimated welding metal height - an excess metal height, or the plate thickness.

### Advantageous Effects of Invention

According to the present disclosure, even when a GMAW method having a high deposition efficiency is used for welding in which a workpiece is provided with a groove, the workpiece and a welding wire are different in composition, and the welding wire contains 5% or more of Ni, automatic welding by GMAW method is made possible which can achieve excellent welding quality and welding work efficiency.

### Brief Description of Drawings

[Fig. 1] Fig. 1 is a schematic view illustrating the configuration of a welding system according to an embodiment of the present disclosure.
[Fig. 2] Fig. 2 is a schematic view illustrating the configuration of a portable welding robot according to the embodiment of the present disclosure.
[Fig. 3] Fig. 3 is a perspective view illustrating the configuration of the portable welding robot according to the embodiment of the present disclosure.
[Fig. 4] Fig. 4 is a conceptual view illustrating an approximate straight line movable mechanism according to the embodiment of the present disclosure.
[Fig. 5] Fig. 5 is a perspective view of vertical welding using the portable welding robot according to the embodiment of the present disclosure.
[Fig. 6] Fig. 6 is a schematic view illustrating touch sensing according to the embodiment of the present disclosure.
[Fig. 7] Fig. 7 is a conceptual diagram illustrating part of setting conditions according to the embodiment of the present disclosure.
[Fig. 8] Fig. 8 is a flowchart illustrating a welding control method according to the embodiment of the present disclosure.
[Fig. 9] Fig. 9 is a perspective view illustrating an arrangement position of a visual sensor according to the embodiment of the present disclosure.
[Fig. 10] Fig. 10 is a picture illustrating an image captured by the visual sensor, corresponding to the embodiment of the present disclosure.
[Fig. 11] Fig. 11 is a schematic diagram illustrating a configuration example of a data processing device according to the embodiment of the present disclosure.
[Fig. 12] Fig. 12 is an explanatory diagram for conceptually explaining a process of generating a learned model according to the embodiment of the present disclosure.
[Fig. 13] Fig. 13 is a view explaining an example of a screen used for a teaching work, corresponding to the embodiment of the present disclosure.
[Fig. 14] Fig. 14 is an explanatory picture illustrating a specific example of a welding image obtained by welding, and an example of welding information in the welding image, corresponding to the embodiment of the present disclosure.
[Fig. 15] Fig. 15 is a table illustrating a first Example of welding according to the embodiment of the present disclosure.
[Fig. 16] Fig. 16 is a plotted graph corresponding to the embodiment of the present disclosure.
[Fig. 17] Fig. 17 is a table illustrating a second Example of welding according to the embodiment of the present disclosure. Description of Embodiments

Hereinafter a welding system according to an embodiment of the present invention will be described with reference to the drawings. Note that this embodiment is an example of the case where a portable welding robot is used. The welding system of the present invention is not limited to the one having the configuration of this embodiment.

Note that a detailed description more than necessary may be omitted. For example, a detailed description of matters already well-known and a redundant description of substantially the same configuration may be omitted. The reason is to avoid unnecessarily redundant description below and to facilitate the understanding of those skilled in the art. Note that the accompanying drawings and the following description are provided to allow those skilled in the art to understand the present disclosure thoroughly, and it is not intended to limit the subject matter described in claims by these drawings and description.

For example, a "unit" or a "device" in an embodiment is not simply limited to a physical component mechanically implemented by hardware, and also includes the one in which the function of the component is implemented by software such as a program. The function of one component may be implemented by two or more physical components, or the function of two or more components may be implemented by one physical component.

### <Configuration of Welding System>

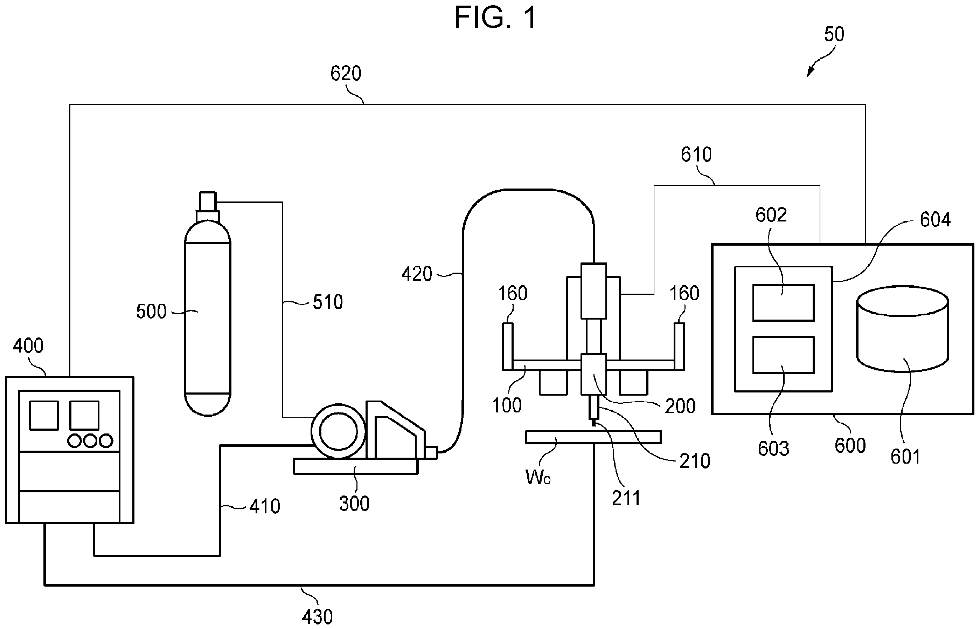

Fig. 1 is a schematic view illustrating the configuration of a welding system according to an embodiment of the present disclosure. As illustrated in Fig. 1, a welding system 50 includes a portable welding robot 100, a feeding device 300, a welding power supply 400, a shielding gas supply source 500, and a control device 600.

### [Control Device]

The control device 600 corresponding to the control device of the present disclosure is coupled to the portable welding robot 100 by a robot control cable 610, and is coupled to the welding power supply 400 by a power supply control cable 620. The control device 600 includes a data holding unit 601 that holds teaching data pre-defining an operation pattern, a welding start position, a welding end position, a working condition, and a welding condition of the portable welding robot 100, and sends a command to the portable welding robot 100 and the welding power supply 400 based on the teaching data to control the operation and the welding conditions of the portable welding robot 100. The control device 600 may have a memory, and the data holding unit 601 may be included in the memory. Note that a memory corresponds to a storage device.

In addition, the control device 600 includes: a groove shape information calculating unit 602 that calculates groove shape information from detection data obtained by the later-described sensing; and a welding condition acquisition unit 603 that corrects and acquires the welding condition of the above-mentioned teaching data based on the groove shape information. The groove shape information calculating unit 602 and the welding condition acquisition unit 603 constitute a control unit 604. The control unit 604 may include a processor.

The control device 600 has a control program that controls the portable welding robot 100. The control program is stored in a storage device such as a memory of the control device 600. The processor included in the control device 600 reads and executes the control program, thereby controlling the portable welding robot 100. The control program has various functions related to the control of the portable welding robot 100.

Although the configuration is not illustrated because it is typical, the control device 600 is integrally formed by a controller for performing teaching and a manual operation of the portable welding robot 100, and a controller having other control functions. However, the control device 600 is not limited to this, and may be divided into plural parts according to their roles, such as two parts: a controller for performing teaching and a controller having other control functions, or the control device 600 may be included in the portable welding robot 100. In this embodiment, signals are sent using the robot control cable 610 and the power supply control cable 620; however, without being limited to this, signals may be sent wirelessly. Note that from the viewpoint of usability at the site of welding, it is preferable to divide the control device 600 into two parts: a controller to perform teaching and a manual operation of the portable welding robot 100, and a controller having other control functions.

### [Welding Power Supply]

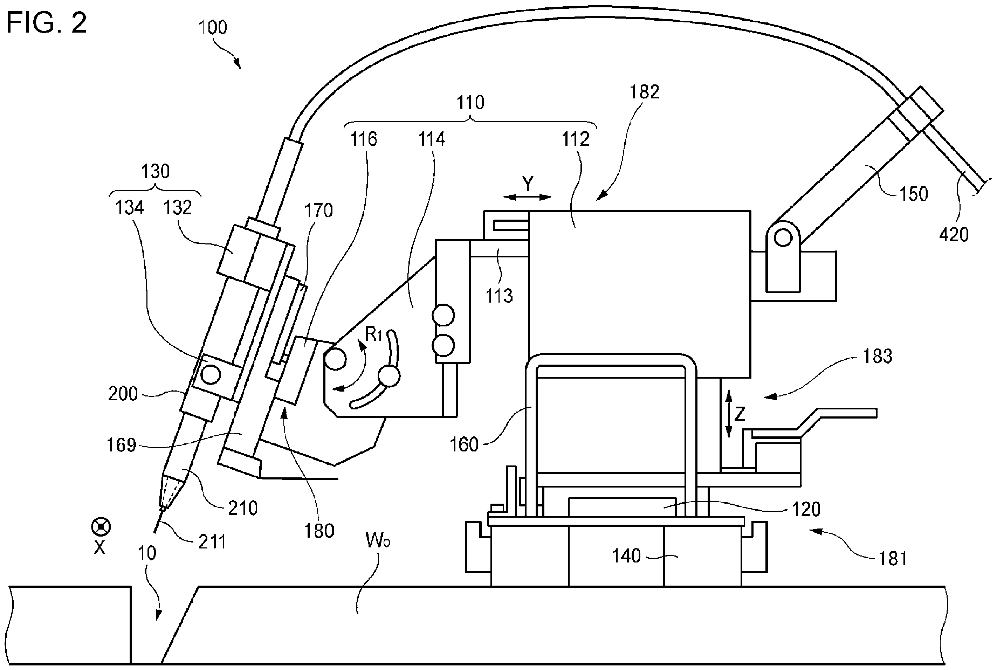

The welding power supply 400 supplies electric power to a welding wire 211 serving as a consumable electrode and work Wo by a command from the control device 600, thereby generating an arc between the welding wire 211 and the work Wo. The electric power from the welding power supply 400 is sent to the feeding device 300 through a power cable 410, and is sent from the feeding device 300 to a welding torch 200 through a conduit tube 420. As illustrated in Fig. 2 which is a schematic view illustrating the configuration of a portable welding robot according to the embodiment of the present disclosure, the electric power from the welding power supply 400 is supplied to the welding wire 211 through a contact chip at the distal end of the welding torch 200. Note that the current at the time of a welding work may be a direct current or an alternating current, and the waveform is not limited to a specific one. Thus, the current may be a pulse such as a rectangular wave or a triangle wave.

In the welding power supply 400, for example, the power cable 410 is connected to the welding torch 200 as a positive electrode, and a power cable 430 is connected to the work Wo as a negative electrode. Note that this is the case where welding is performed with reverse polarity, and when welding is performed with straight polarity, the power cable as a positive electrode may be connected to the work Wo, and the power cable as a negative electrode may be connected to the welding torch 200.

### [Shielding Gas Supply Source]

The shielding gas supply source 500 is comprised of supplementary members such as a container in which shielding gas is enclosed, and a valve. A shielding gas is delivered from the shielding gas supply source 500 to the feeding device 300 through a gas tube 510. The shielding gas delivered to the feeding device 300 is delivered to the welding torch 200 through the conduit tube 420. The shielding gas delivered to the welding torch 200 flows within the welding torch 200, and is guided to a nozzle 210, then blown out from the distal end of the welding torch 200. As the shielding gas in this embodiment, e.g., argon (Ar), carbon dioxide (CO₂) or a mixed gas thereof may be used, and preferably, it is desired that welding be performed with 100% CO₂ gas.

### [Feeding Device]

The feeding device 300 feeds and delivers the welding wire 211 to the welding torch 200. The welding wire 211 fed by the feeding device 300 is not particularly limited, and selected by the properties of the work Wo and the welding form, and for example, a solid wire or a wire containing flux is used; however, from the viewpoint of deposition efficiency, a wire containing flux is preferable. The details of the welding wire will be described later, and in this embodiment, it is preferable to use an inconel-based or hastelloy-based high-Ni material, and it is further preferable to use a hastelloy-based high-Ni material. The wire diameter of the welding wire is not particularly limited, but in this embodiment, a preferred wire diameter is such that the upper limit is 1.6 mm, and the lower limit is 0.9 mm.

In the conduit tube 420 according to this embodiment, an electrically conducting path serving as a power cable is formed on the sheath side of the tube, and a protective tube to protect the welding wire 211 is disposed inside the tube, and the flow path for the shielding gas is formed. However, the conduit tube 420 is not limited to this, and for example, for the welding torch 200, it is possible use what is obtained by bundling a power supply cable and a shielding gas supply hose around a protective tube at the center to feed the welding wire 211. Alternatively, for example, a tube for delivering the welding wire 211 and the shielding gas, and the power cable may be separately installed.

### [Portable Welding Robot]

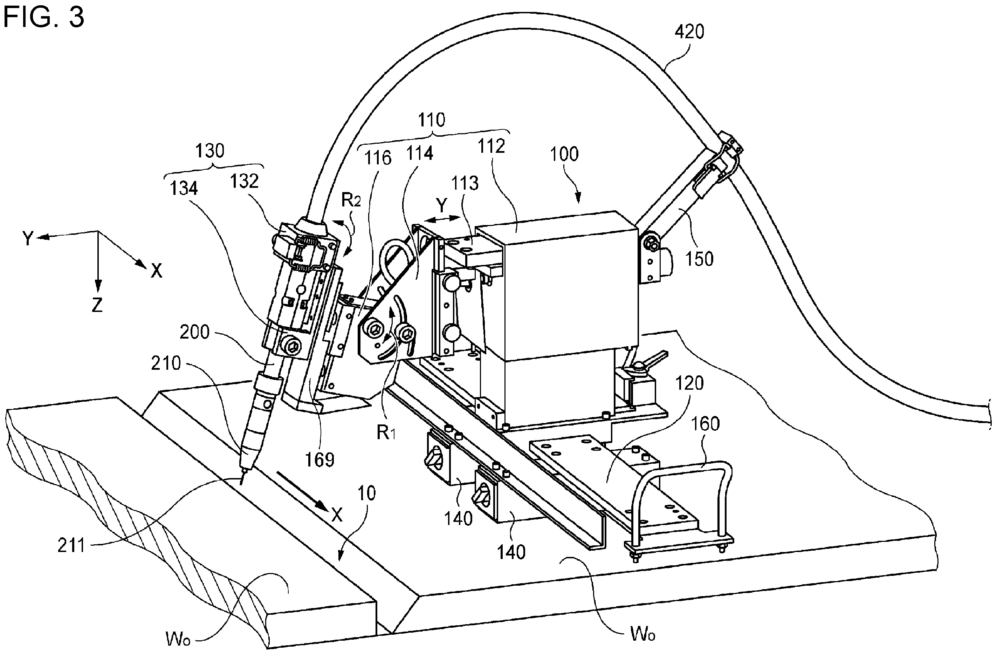

As illustrated in Fig. 2 and Fig. 3, the portable welding robot 100 includes: a guide rail 120; a robot body 110 installed on the guide rail 120 and configured to move along the guide rail 120; and a torch connector 130 installed on the robot body 110. Fig. 3 is a perspective view illustrating the configuration of the portable welding robot according to the embodiment of the present disclosure. The robot body 110 mainly includes: a main body part 112 installed on the guide rail 120; a fixed arm part 114 mounted on the main body part 112; and a welding torch rotation drive unit 116 mounted on the fixed arm part 114 rotatably in arrow R1 direction.

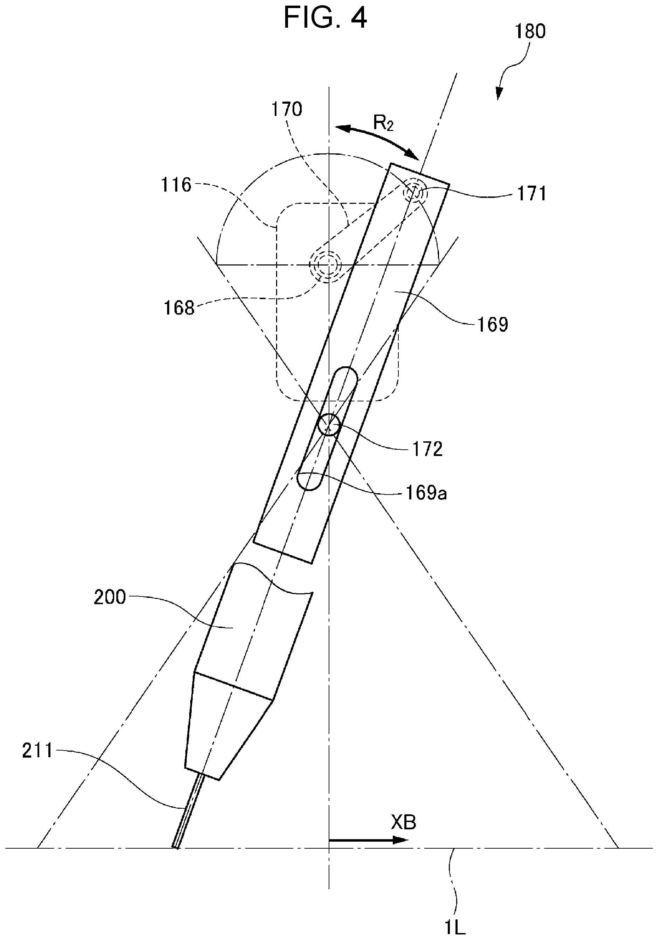

Fig. 4 is a conceptual view illustrating an approximate straight line movable mechanism according to the embodiment of the present disclosure. As illustrated in Fig. 4, the torch connector 130 is mounted on the welding torch rotation drive unit 116 via a sliding table 169 and a crank 170. The torch connector 130 includes a torch clamp 132 and a torch clamp 134 to fix the welding torch 200. In addition, the main body part 112 is provided with a cable clamp 150 on the side opposite to the side on which the welding torch 200 is mounted, the cable clamp 150 being configured to support the conduit tube 420 that connects the feeding device 300 and the welding torch 200.

In this embodiment, a detection means is provided which is a touch sensor to sense the surface of the groove 10 by utilizing a voltage drop phenomenon which occurs when a voltage is applied across the work Wo and the welding wire 211 and the welding wire 211 comes into contact with the work Wo. The detection means is not limited to the touch sensor of this embodiment, and an image sensor, a laser sensor, or a combination thereof may be used; however, for the sake of simplicity of the device configuration, it is preferable to use the touch sensor in this embodiment.

As illustrated by arrow X of Fig. 2, the main body part 112 of the robot body 110 is provided with an X-axis movable mechanism 181 that moves the robot body 110 along the guide rail 120 in the X-axis direction which is a perpendicular direction to the surface of Fig. 2 and the weld line direction. In addition, the main body part 112 is provided with a Y-axis movable mechanism 182 that moves the fixed arm part 114 via a slide supporter 113 in Y-axis direction with respect to the main body part 112, the Y-axis direction being perpendicular to the X-axis direction and the Z-axis direction, and the width direction of the groove 10. Furthermore, the main body part 112 is provided with a Z-axis movable mechanism 183 that moves the robot body 110 in the depth direction of the groove 10 perpendicular to the X-axis direction.

Furthermore, as illustrated in Fig. 4, the sliding table 169 on which the torch connector 130 is mounted, the crank 170 and the welding torch rotation drive unit 116 constitute an approximate straight line movable mechanism 180 that moves the distal end of the welding wire 211 along the later-described approximate straight line.

Specifically, the crank 170 is fixed to a rotation shaft 168 of a motor (not illustrated) fixed to the welding torch rotation drive unit 116, and the distal end of the crank 170 is linked to one end of the sliding table 169 by a linkage pin 171. The sliding table 169 includes a long groove 169a at an intermediate section, and a securing pin 172 fixed to the welding torch rotation drive unit 116 is slidably fitted in the long groove 169a.

Thus, when the crank 170 rotates around the rotation shaft 168 by a motor which is not illustrated, the sliding table 169 rotates around the securing pin 172 as a fulcrum, and is guided by the fitted securing pin 172 to move along the long groove 169a. Specifically, due to rotation of the crank 170 as indicated by arrow R2 shown in Fig. 3 and Fig. 4, the torch connector 130 on which the welding torch 200 is mounted drives the distal end of the welding wire 211 along the approximate straight line indicated by a virtual line IL in Fig. 4 while tilting the welding torch 200 in the X-axis direction. Note that in this embodiment, the mechanism to cause movement in the X-axis direction includes the above-mentioned X-axis movable mechanism 181 and approximate straight line movable mechanism 180, and hereinafter, when a description is given with these mechanisms distinguished, movement made in the X-axis direction by the X-axis movable mechanism 181 is indicated by "XA-axis direction", movement made in the X-axis direction by the approximate straight line movable mechanism 180 is indicated by "XB-axis direction", and when the movable mechanism is not particularly specified, it is simply indicated by "X-axis direction", and a description is given.

As indicated by arrow R₁ in Fig. 2, the welding torch rotation drive unit 116 is rotatably mounted with respect to the fixed arm part 114, and can be adjusted to an optimal angle and fixed.

As described above, for three directions, that is, the X-axis direction, the Y-axis direction, the Z-axis direction, the robot body 110 can drive the welding torch 200 at its distal end with four degrees of freedom, that is, by the approximate straight line movable mechanism 180, the X-axis movable mechanism 181, the Y-axis movable mechanism 182, and the Z-axis movable mechanism 183. However, the robot body 110 is not limited to this, and may be drivable with any number of degrees of freedom according to the application.

With the configuration as described above, the distal end of the welding wire 211 of the welding torch 200 mounted on the torch connector 130 can be oriented to any direction. For example, the robot body 110 can be driven on the guide rail 120 in the X-axis direction. The welding torch 200 can be driven in the Y-axis direction that is the width direction of the groove 10 or the Z-axis direction that is the depth direction of the groove 10. Also, the welding torch 200 can be tilted by the driving of the crank 170 depending on the working situation, such as the later-described leading angle or trailing angle.

For example, an attachment member 140 such as a magnet and an adsorption pad is provided below the guide rail 120 which is configured to be easily attached and detached to and from the work Wo by the attachment member 140. When the portable welding robot 100 is set to the work Wo, an operator can easily set the portable welding robot 100 on the work Wo by gripping both-side handles 160 of the portable welding robot 100.

### <Weaving Control Method>

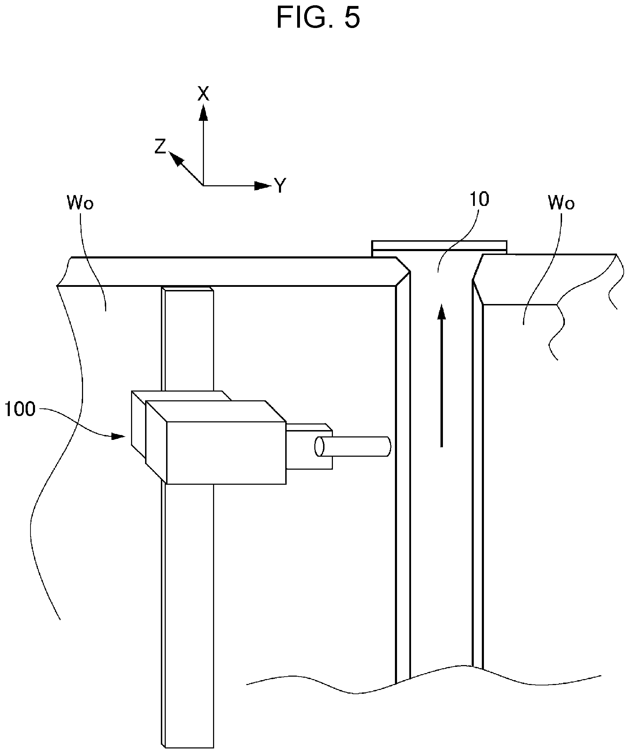

Subsequently, a weaving control method using the control device 600 included in the welding system 50 according to this embodiment will be described in detail. In this embodiment, vertical welding which is the most difficult to perform among the welding work for the inner tank of an LNG tank will be described below as an example. A perspective view of vertical welding using the portable welding robot 100 according to the embodiment of the present disclosure is illustrated in Fig. 5. In this embodiment, welding is performed from below to above with respect to the surface of Fig. 5, specifically, the direction of the arrow along the X-axis illustrated in Fig. 5 is the welding direction, and weaving is performed in a direction crossing the welding direction.

When the groove 10 is welded, before the start of welding, welding information for the welding is set or acquired. The setting of the welding information may be manual setting or the like. The acquisition of the welding information may be performed by sensing or the like. The welding information referred to herein indicates a generic name of an information group related to welding and including at least work information and welding condition information. In addition to work information and welding condition information, examples of the welding information include, e.g., environmental information including information of an item such as temperature and humidity, and welding phenomenon information including information of an item such as sputter and fume amount.

Examples of items constituting work information include gap, plate thickness, groove depth, estimated welding metal height, welding material, shielding gas type, base material, welding length, number of layers, number of passes, and excess metal height of each layer. The estimated welding metal height referred to herein indicates the value of the sum of a groove depth and an any expected excess metal height. Examples of items constituting welding condition information include welding current, arc voltage, welding speed, shielding gas flow rate, weaving width, weaving cycle, weaving end stop time, position of weaving reference line, and weaving pattern. Examples of weaving pattern include e.g., diagonal weaving. When the conditions related to weaving, such as weaving width, weaving cycle, weaving end stop time, position of weaving reference line, and weaving pattern are collectively referred to and described, hereinafter those conditions are referred to as the "weaving condition". The weaving width may be called the "weaving amplitude" or simply the "amplitude".

As a simple process performed before welding until work information and welding condition information are acquired, the following (A) to (C) may be mentioned.
(A) In the control device 600, a welding mode is determined according to items such as the type of welding wire, the type of shielding gas, and the welding position among the work information, and a database for condition acquisition and correction (hereinafter also referred to as "condition acquisition and correction DB") is determined for the welding mode. The condition acquisition and correction DB may be stored in e.g., a memory of the control device 600, or may be stored in a storage device included in another device that can communicate with the control device 600.
(B) The robot body 110 is driven based on the operation signal of the control device 600, and automatic sensing of a groove shape is started using a touch sensor.
(C) Groove shape information is calculated by the automatic sensing, and lamination design information is calculated based on the groove shape information. A work condition, and a welding condition are acquired based on at least the groove shape information, the lamination design information and the above-mentioned condition acquisition and correction DB, or pre-set welding conditions are corrected.

Next, as the embodiment, the details of the processes from the acquisition of the work information and welding condition information mentioned above to the acquisition or correction of various conditions will be described below.

### [Sensing Step before Welding]

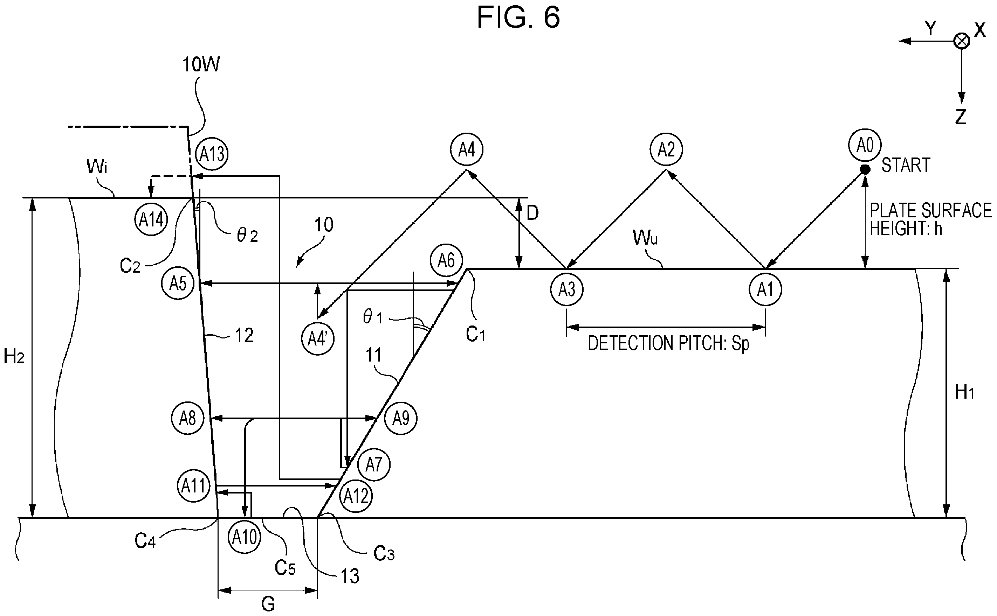

The sensing step before the start of welding is carried out by performing touch sensing on the groove shape, plate thickness, start and terminal ends with the above-mentioned touch sensor. Fig. 6 is a schematic view illustrating touch sensing according to the embodiment of the present disclosure. The distal end of the welding wire 211 is moved to respective positions of A0 to A14 in Fig. 6 to sense the shape of the work. The above-mentioned groove shape, plate thickness, start and terminal ends can be determined by identifying the positions such as A1, A3, A5, A6 when the distal end of the welding wire 211 comes into contact with the work.

After the sensing step, groove shape information calculation step is performed in which groove shape information is calculated from the detected data of the groove cross-sectional shape at the groove shape detection positions obtained in the sensing step. Here, the groove shape information includes e.g., groove angle of groove shape, plate thickness, groove depth, estimated welding metal height, gap, distance between work ends. After the groove shape information calculation step, a step of inputting the calculated data to the data holding unit 601 is performed. In this embodiment, in the groove shape information calculation step, at least one of the plate thickness, groove depth, or estimated welding metal height, and the gap are calculated as the groove shape information, and input to the data holding unit 601. Note that when the gap is smaller than the wire diameter of the welding wire in the groove shape information calculation step, the gap amount may be calculated as 0. Also, lamination design information calculation step is performed in which lamination design information is calculated based on the calculated groove shape information. Here, the lamination design information includes e.g., the number of lamination layers, the number of passes, and the metal height of each layer. After the lamination design calculation step, a step of inputting the calculated data to the data holding unit 601 is performed.

Next, setting or correcting the welding condition in teaching program data is performed based on the data of groove shape information and lamination design information which have been input to the data holding unit 601, and the condition acquisition and correction DB. In this embodiment, e.g., welding current, arc voltage, welding speed, and weaving condition are set or corrected. Alternatively, an arc start position may be determined. Note that the setting or correcting means that when a setting value has not been set yet, a setting value is set, and when a setting value has been already set, the setting value is corrected.

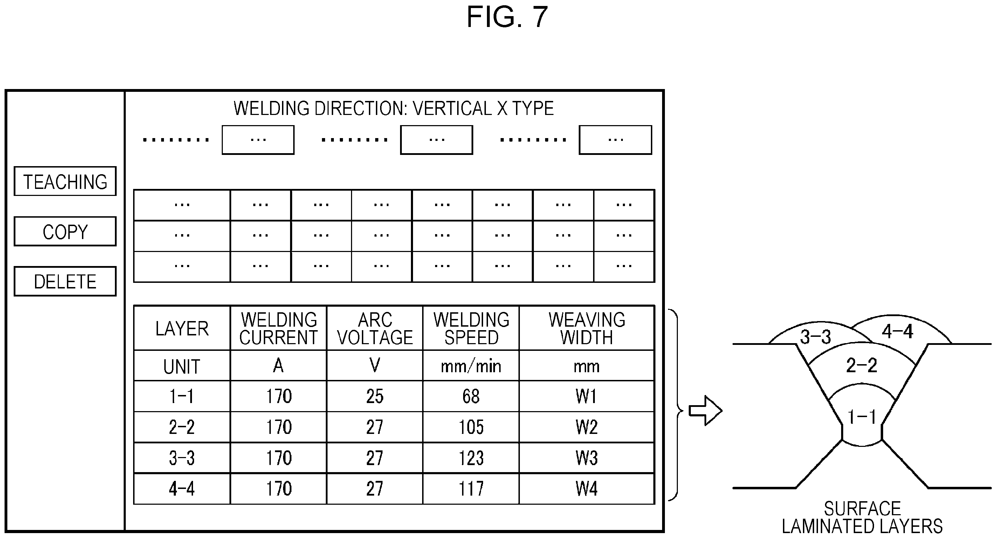

Fig. 7 is a conceptual diagram illustrating part of setting conditions according to the embodiment of the present disclosure. The example of Fig. 7 shows a case where 3 layers, 4 passes are calculated in the lamination design information. The unit of layer-pass illustrated in Fig. 7 is such that 1st layer, 1st pass is denoted by "1-1"; 3rd layer, 3rd pass is denoted by "3-3"; and 3rd layer, 4th pass is denoted by "3-4", for example. Thus, in Fig. 7, the groove is welded so that passes are formed in the order of 1-1 (1st layer, 1st pass), 2-2 (2nd layer, 2nd pass), 3-3 (3rd layer, 3rd pass), 3-4 (3rd layer, 4th pass). Note that in multi-pass welding, welding of the first layer (1-1 in Fig. 7) which is a welding portion where the workpiece and the welding wire are different in composition is the most difficult, and the present invention exhibits the most remarkable effect in the welding of the first layer. In this embodiment, as a weaving condition, the amplitude of weaving is acquired based on the setting value for at least one of plate thickness, groove depth or estimated welding metal height, and a predetermined amplitude DB, and is corrected or set as the welding condition in teaching program data. Specifically, in Fig. 7, weaving widths W1 to W4 are corrected or set. The DB may be stored in e.g., a memory of the control device 600, or may be stored in a storage device included in another device that can communicate with the control device 600.

The amplitude DB may include table data associated with correction values (hereinafter also referred to as "weaving width correction values") to the amplitude of weaving using, for example, the setting value for at least one of plate thickness, groove depth or estimated welding metal height as a threshold value.

A more specific example will be given in which an estimated welding metal height is used as a threshold value included in the table data. Let the threshold value for the estimated welding metal height be 16 mm, 22 mm and 25 mm. A weaving width correction value is defined for each of the ranges partitioned by these three threshold values, and saved in advance as the amplitude DB. Specifically, when the estimated welding metal height is 16 mm or less, the first weaving width correction value can be acquired by referring to the amplitude DB. When the estimated welding metal height exceeds 16 mm and less than or equal to 22 mm, the second weaving width correction value can be acquired. When the estimated welding metal height exceeds 22 mm and less than or equal to 25 mm, the third weaving width correction value can be acquired. When the estimated welding metal height exceeds 25 mm, the fourth weaving width correction value can be acquired.

For example, when the estimated welding metal height is calculated to be 18 mm in the above-mentioned sensing step, it falls within the range exceeding 16 mm and less than or equal to 22 mm based on the amplitude DB, thus the weaving width correction value is the second weaving width correction value.

The amplitude DB may be created in advance to define the weaving width correction value for each of threshold values, and the weaving width correction value to be set may be derived from the amount of change in the weaving width correction value between threshold values. For example, an estimated welding metal height is used as a threshold value, and the amplitude DB is used in which the weaving width correction value is 5 mm for 16 mm of the estimated welding metal height, and the weaving width correction value is 11 mm for 22 mm of the estimated welding metal height. In this case, when the estimated welding metal height is calculated to be 18 mm in the above-mentioned sensing step, the weaving width correction value is derived to be 7 mm based on the amplitude DB. For example, the weaving width correction value is derived to be 7 mm based on the following calculation expression. The weaving width correction value = 5 + (11 - 5)×(18 - 16)/(22 - 16).

The weaving width correction value in this embodiment indicates the increase or decrease value for half width with reference to the gap width or the groove width at the central position of the pre-calculated layer height. Specifically, when the gap width is used a reference, the basic expression to calculate the value of the weaving amplitude (mm) to be determined is the set gap width (mm) + (weaving width correction value (mm)×2). For example, when the gap width is 5 mm, and the weaving width correction value is 2 mm, the weaving amplitude is calculated to be 9 mm. When the gap width is 0, the basic expression may be adopted, and only when the gap is 0, setting may be made so that weaving is not performed or weaving is performed with a predetermined fixed value.

Note that the layer height is the metal height for one layer, which is calculated as the lamination design information. For example, when the target position is the first layer, the groove width at the central position of the calculated first layer metal height serves as a reference. When the target layer has multiple passes, the calculated value should be divided by the number of passes. For example, when the weaving amplitude is calculated to be 9 mm, and the target layer is calculated to have 2 passes in the lamination design information, the real weaving amplitude for each pass is calculated to be 4.5 mm.

The weaving width correction value may be set as a coefficient for the gap. In this case, the basic expression may be the set gap width (mm) × weaving width correction value (coefficient). For example, when the gap width is 5 mm, and the weaving width correction value is 1.2 as a coefficient, the weaving amplitude is calculated to be 6 mm.

Note that addition, subtraction, multiplication or division of a different correction value or correction expression C may be applied to the basic expression separately. For example, in the case of addition, weaving width = basic expression + C. In the case of multiplication, weaving width = basic expression × C.

As mentioned above, welding of the inner tank of an LNG tank is welding between a 5 to 12% Ni steel sheet and a high Ni welding material, thus extremely difficult due to the difference in physical property between the steel sheet and the welding material, and a high welding technique is required. In the present invention, it has been found that even in automatic welding, superior welding quality in GMAW between a 5 to 12% Ni steel sheet and a high Ni welding material can be ensured by determining the amplitude of weaving based on the plate thickness, groove depth or estimated welding metal height. A specific control range that can achieve further superior welding efficiency and welding quality in automatic welding will be described.

Excluding the case where the value of the gap or the groove width at the central position of the layer height is 0, it is preferable to set a weaving width according to at least one of the plate thickness, groove depth or estimated welding metal height so that the ratio of the weaving width (W) to the value (G) of the set gap or the value (G) of the groove width at the central position of the layer height falls within a numerical value range between the later-described first value and second value. Note that the first value is to be larger than the second value. The setting made in this manner can reduce the amount of molten metal to form a molten pool, and maintain an appropriate amount of molten metal as well as prevent sagging of bead and leakage from the backing member, and lack of fusion at weaving ends.

The ratio (W/G) of the weaving width (W) to one of the gap (G) or the value (G) of the groove width at the central position of the layer height mentioned above is the value obtained by dividing the weaving width by the value of the gap or the groove width at the central position of the layer height. When the plate thickness is large, heat is likely to escape, thus a bad shape may be formed in the condition as it is. Therefore, it is preferable to further expand weaving for a larger plate thickness even with the same value of the gap or the groove width at the central position of the layer height. The ratio of the weaving width to the gap is preferably set to be larger in the range less than or equal to the first value mentioned above.

Note that the information that associates work information including plate thickness, groove depth or estimated welding metal height with a plurality of welding conditions may be pre-stored in the condition acquisition and correction DB or the amplitude DB, and the welding conditions other than the weaving amplitude may be further set or corrected based on the setting values for the plate thickness, groove depth or estimated welding metal height, and the DB.

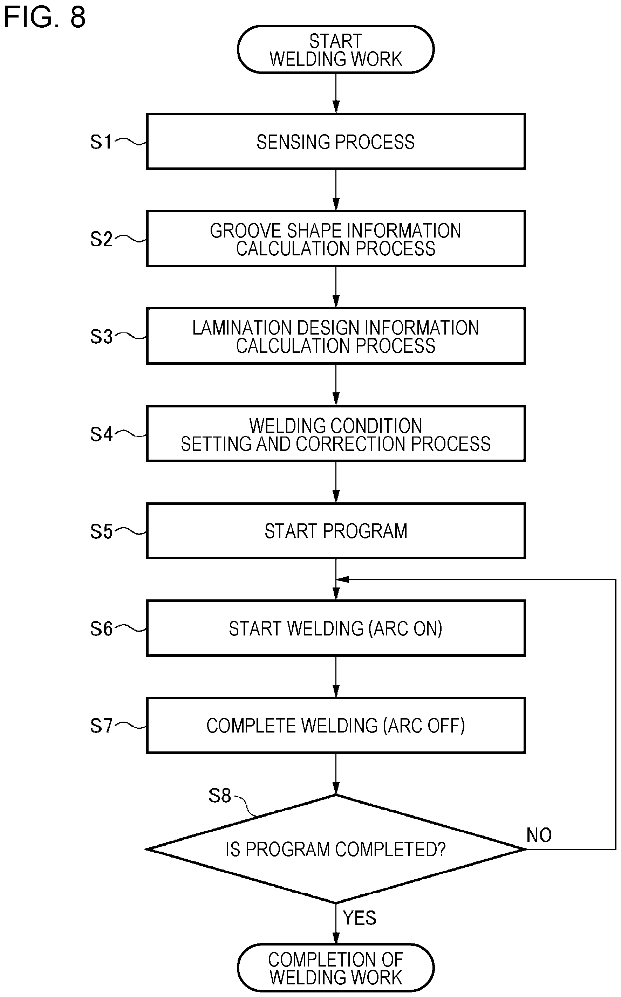

Next, a further preferred process in this embodiment will be described with reference to Fig. 8. Fig. 8 is a flowchart illustrating a welding control method according to the embodiment of the present disclosure.

As preparation before welding, in step S1, touch sensing is performed under the control of the control device 600 (sensing process). In the sensing process, at least a plate thickness, a welding length, a groove angle, a root gap, and a surface level difference are measured. Note that a groove depth, an estimated welding metal height may be additionally measured.

In step S2, the control device 600 calculates the values of at least plate thickness, welding length, groove angle, root gap, and surface level difference, and inputs the values as the setting values of the control device 600 (groove shape information calculation process). Note that a groove depth, an estimated welding metal height may be additionally input as setting values.

In step S3, at least the number of layers, the number of passes, the metal height of each layer are calculated from these setting values as the lamination design information, and are input as the setting values of the control device 600 (lamination design information calculation process).

The processes having some calculating means for inputting a setting value, such as the groove shape information calculation process in step S2 and the lamination design information calculation process in step S3 are defined to be the "work information setting process" as a generic name and described in the present invention. In this embodiment, the work information setting process includes at least two process: the groove shape information calculation process, and the lamination design information calculation process.

In step S4, the control device 600 determines the welding conditions including at least the weaving width based on the setting values and the information saved in various DB, and sets or corrects the welding conditions (welding condition setting and correction process).

In step S5, the welding program is started based on the control by the control device 600. In step S6, welding is started (arc on), and in step S7, predetermined welding is performed until the welding is completed (arc off).

Next, in step S8, the control device 600 determines whether the welding program is completed. Specifically, it is determined whether the welding in all processes defined in the welding program has been completed. When the welding is not completed, in other words, when NO is selected in step S8, the process returns to step S6, and the operations in step S6 and S7 are repeated again.

Note that "program completed" in step S8 indicates that welding at all positions from a welding start position to a welding end position defined in the welding program is completed. In multi-pass welding, the "program completed" indicates that welding in all layers at the above-mentioned positions is completed. In this case, the operations in step S6 and S7 are repeated until the welding in all layers is completed. In step S8, when the program is determined to be completed, the welding work is finished.

In the present invention, in addition to the setting of a weaving width, it is further preferable that the torch angle be also set or corrected before welding work or during welding. A welding material containing 5% or more of Ni has a lower melting point than a steel sheet with Ni content lower than that of the welding material, and has a melty property, thus the amount of molten metal forming a molten pool is likely to increase. When the amount of molten metal increases, the heat of the arc does not reach the steel sheet, thus penetration may not be sufficient. Even if the welding current is increased to provide sufficient penetration, the molten metal may further increase, and not only the heat of the arc may not reach the steel sheet, but also sagging of the molten metal may occur. In this case, in general, for the purpose of preventing the sagging of the molten metal, the torch angle is set upward to push up the molten metal, but in the present invention, it is preferable to set or control the torch angle downward, that is, to a trailing angle before welding or during welding. This is because the welding material containing 5% or more of Ni has a relatively low melting point, and has a fast solidification speed, thus a favorable effect for the penetration performance can be obtained by placing emphasis on causing the arc to reach the steel sheet rather than pushing up the molten metal for the purpose of preventing the sagging of the molten metal. For example, preferably, the torch angle is such that the trailing angle is in a range from 0 degree to 20 degrees. In this embodiment, the torch angle is set such that the trailing angle is 10 degrees. For vertical position in this embodiment, before welding, any torch angle is preferably set at a trailing angle. In the case of vertical position, it is preferable that the torch be tilted in a trailing angle direction, and the direction in which the torch is tilted may be changed as needed according to the welding position.

### <Modifications>

In this embodiment, the welding conditions are set or corrected before welding; however, a visual sensor or a laser sensor may be mounted on the portable welding robot 100 to capture welding phenomena during welding by the sensor, and the welding conditions may be corrected as needed during welding. For example, welding images including a molten pool captured by a visual sensor are input, and the area of the molten pool and feature variables are calculated based on image processing or the like, and conditions such as welding current, arc voltage, welding speed, weaving condition and torch angle may be corrected based on calculated data. Note that the welding conditions may be set or corrected during welding, for example, between step S6 and step S7 of Fig. 8.

Also, a plurality of pieces of learning data may be acquired which associate welding image data obtained by a visual sensor or the like during welding with feature information obtained from welding phenomenon information such as a molten pool shape, an arc position, the situation of sputter and fume, and the welding image data may be input using the acquired learning data, then a learned model generated to output the feature information may be prepared. The welding image data obtained during welding is input using the learned model as needed, and the welding conditions during welding may be set or corrected based on the feature information output from the learned model. More preferably, at least one feature variable among the features related to wire position, molten pool shape, and arc position is output, and at least one condition among the welding current, arc voltage, welding speed, and torch angle may be controlled to be corrected based on the feature variable.

### <Composition of Welding Wire>

Next, the welding material (welding wire) to be used in the present invention will be described. In the present specification, "to" is used in the sense that the numerical values stated before and after "to" are included as a lower limit value and an upper limit value. Also, "(wire)" suffixed to an element is % by mass with respect to the entire mass of the wire unless otherwise explained, and indicates the total amount of the single element and the element conversion value of the compounds containing the element. For example, when Mn _{(Wire)} is suffixed, it indicates the total of Mn in the entire wire, and the Mn converted value of the compounds containing Mn. Note that the Mn in the entire wire includes the Mn contained in a hoop and the metal powder of Mn contained in the flux. In addition, "(metal)" suffixed to an element indicates the element contained in deposited metal, and shows in terms of % by mass with respect to the total mass of deposited metal.

In this embodiment, a welding material may be mentioned, the welding material being used for welding of the inner tank material of an LNG tank, specifically, a steel sheet containing 5 to 12% Ni. The welding material may be a wire containing flux, or may be a solid wire, but from the viewpoint of the amount of weld deposition, the welding material is preferably a wire containing flux. In the case of solid wire, the composition range prescribed by JIS Z 3334:2011 is preferably adopted. In the case of wire containing flux, the component range of welding wire should be the chemical component range of deposited metal prescribed by JIS Z 3335:2021 for wire containing flux in nickel and nickel alloy arc welding. A component other than the elements prescribed by JIS Z 3335:2021 may be further added to the wire containing flux according to any application based on common general technical knowledge, thereby the mechanical performance may be adjusted, and welding workability may be improved.

The wire containing flux prescribed by JIS Z 3335:2021 includes inconel-based wire and hastelloy-based wire, but it is more preferably to use hastelloy-based wire because hot cracking resistance, and high toughness, high strength even at an ultralow temperature can be ensured, and for the hastelloy-based wire, it is further preferable that the component range of welding wire be the chemical component range of deposited metal prescribed by JIS Z 3335:2021 TNi1013 or JIS Z 3335:2021 TNi6275.

Hereinafter chemical components of wire containing flux along with the reason for limitation will be described more specifically, the chemical components being in the chemical component range of deposited metal prescribed by JIS Z 3335:2021 TNi1013 or JIS Z 3335:2021 TNi6275, and most preferable and usable in this embodiment. Note that the deposited metal is produced by the procedure in JIS Z 3184:2003, and the components of the wire containing flux are designed to be the chemical components of deposited metal prescribed by JIS Z 3335:2021 TNi1013 or JIS Z 3335:2021 TNi6275 by the procedure.

### (C_{(Wire)} : 0.050% by mass or less)

C is a component that has an effect on the strength of deposited metal or welding metal, and has higher strength for a greater content. C may be contained in order to meet the strength range required for welding of nickel and nickel alloy, but when C is excessively added, carbide is likely to be precipitated in deposited metal or welding metal, and the toughness for a target strength decreases, thus trade-off between strength and toughness may not be balanced. Therefore, the content C_{(Wire)} in the wire is set to 0.050% by mass or less, and more preferably, 0.040% by mass or less. On the other hand, to adjust the strength, the content of C is preferably 0.001% by mass or more. The C source in the wire includes the C contained in a hoop, such as graphite and carbide added to the flux, however, preferably, from the viewpoint of reducing carbide, C is preferably low, thus should not be added to the flux as much as possible.

### (Mn_{(Wire)}: 5.00% by mass or less)

Mn is γ phase formation element which is effective on reinforcement of matrix. Mn is contained in order to meet the mechanical performance required for welding of nickel and nickel alloy. Excessive addition of Mn increases inclusion, and toughness may decrease. Therefore, the content Mn_{(Wire)} in the wire is set to 5.00% by mass or less, and more preferably, 1.80% by mass or less. On the other hand, to adjust the strength, the content Mn_{(Wire)} is preferably 0.01% by mass or more. The Mn source in the wire includes metal powder of Mn added to the flux, metal powder of alloy containing Mn, a compound containing Mn, and Mn contained in a hoop. For example, single Mn metal, Fe-Mn alloy, MnO₂ and MnCOs contained in the flux may be mentioned.

### (Si_{(Wire)}: 3.0% by mass or less)

Si is a component that increases the viscosity of slag, and is an effective component to obtain a favorable bead shape, thus may be contained in the wire in this embodiment. However, when Si is excessively contained, slag detachability may decrease. Thus, in the wire in this embodiment, the content Si_{(Wire)} is preferably 0.1% by mass or more, further preferably 0.2% by mass or more, still further preferably 0.3% by mass or more, and preferably 3.0% by mass or less, more preferably 1.5% by mass or less. The Si source in the wire includes metal powder of Si added to the flux, metal powder of alloy containing Si, a compound containing Si, and Si contained in a hoop. For example, Si oxide such as silica sand, potassium feldspar, wollastonite, sodium silicate and potassium silicate, single Si, and Si alloy such as Fe-Si contained in the flux may be mentioned.

### (P_{(Wire)}: 0.020% by mass or less)

### (S_{(Wire)}: 0.020% by mass or less)

P and S are components which are inevitably contained as impurities in the wire in this embodiment. When P_{(Wire)} or S_{(Wire)} in the wire exceeds 0.02% by mass, low melting point compounds of these elements and Ni are produced in grain boundaries, thus hot cracking resistance decreases. Therefore, it is preferable that the content P_{(Wire)} and S_{(Wire)} in this embodiment each be reduced to 0.020% by mass or less.

### (Cr_{(Wire)}: 20% by mass or less)

Cr has the effect of improving the corrosion resistance and strength of the welding metal; however, when the amount of Cr in the wire exceeds 20% by mass, hot cracking resistance decreases. Therefore, the content Cr_{(Wire)} in this embodiment is set to 20% by mass or less. In the wire in this embodiment, the content Cr_{(Wire)} is preferably 1% by mass or more, further preferably 2% by mass or more, still further preferably 3% by mass or more, and preferably 20% by mass or less, more preferably 19% by mass or less, further preferably 18% by mass or less. The Cr source in the wire includes metal powder of Cr added to the flux, metal powder of alloy containing Cr, a compound containing Cr, and Cr contained in a hoop. When Cr is added using the flux, it is preferable to add using metal powder of Cr, metal powder of alloy containing Cr, for example, single Cr metal, and Fe-Cr alloy and Cr₂O₃ may be mentioned.

### (Mo_{(Wire)}: 10 to 20% by mass)

Mo has the effect of improving the corrosion resistance and strength of the welding metal; however, when its content exceeds 20% by mass, hot cracking resistance decreases. Therefore, the content Mo_{(wire)} in this embodiment is set to 10 to 20% by mass. In the wire in this embodiment, the content Mo_{(Wire)} is preferably 11% by mass or more, further preferably 12% by mass or more, and preferably 19% by mass or less, more preferably 18% by mass or less. The Mo source in the wire includes metal powder of Mo added to the flux, metal powder of alloy containing Mo, a compound containing Mo, and Mo contained in a hoop. When Mo is added using the flux, it is preferable to add using metal powder of Mo, metal powder of alloy containing Mo, for example, metal Mo and Fe-Mo alloy may be mentioned.

### (Al_{(Wire)}: 3.00% by mass or less)

Al is a strong deoxidizing element, and causes an oxidation reaction in the welding metal to produce an oxide (hereinafter also referred to as "slag") in a molten pool, and enables welding in all positions including a difficult position such as in vertical welding and overhead welding. Excessive addition of Al increases inclusion, thus the content Al_{(Wire)} is set to 3.00% by mass or less. The content Al is more preferably 2.50% by mass or less, further preferably 1.70% by mass or less. The content Al_{(Wire)} is preferably 0.10% by mass or more. The Al source in the wire includes metal powder of Al added to the flux, metal powder of alloy containing Al, a compound containing Al, and Al contained in a hoop. When Al is added using the flux, it is preferable to add using metal powder of Al, metal powder of alloy containing Al because this can further reduce the amount of oxygen in the welding metal, and from the viewpoint of controlling slag viscosity, it is preferable to add in the form of Al₂O₃.

### (Mg_{(Wire)}: 3.00% by mass or less)

Mg is a strong deoxidizing element like Al, and causes an oxidation reaction in the welding metal to produce an oxide in a molten pool, and enables welding in all positions including a difficult position such as in vertical welding and overhead welding. Excessive addition of Mg increases inclusion, thus the content Mg_{(Wire)} is set to 3.00% by mass or less. The content Mg is more preferably 1.50% by mass or less, further preferably 1.00% by mass or less. The content Mg_{(Wire)} is preferably 0.30% by mass or more, further preferably 0.50% by mass or more. The Mg source in the wire includes metal powder of Mg added to the flux, metal powder of alloy containing Mg, a compound containing Mg, and Mg contained in a hoop. When Mg is added using the flux, it is preferable to add using metal powder of Mg, metal powder of alloy containing Mg because this can further reduce the amount of oxygen in the welding metal.

### (Ti_{(Wire)}: 5.00% by mass or less)

Ti is a strong deoxidizing element like Al, and causes an oxidation reaction in the welding metal to produce an oxide in a molten pool, and enables welding in all positions including a difficult position such as in vertical welding and overhead welding. Excessive addition of Ti increases inclusion, thus the content Ti_{(Wire)} is set to 5.00% by mass or less. The Ti source in the wire includes metal powder of Ti added to the flux, metal powder of alloy containing Ti, a compound containing Ti, and Ti contained in a hoop. When Ti is added using the flux, it is preferable to add using metal powder of Ti, metal powder of alloy containing Ti, in the form of TiO₂ because this can further reduce the amount of oxygen in the welding metal.

### (Zr_{(Wire)}: 3.00% by mass or less)

Zr is a strong deoxidizing element like Al, and causes an oxidation reaction in the welding metal to produce an oxide in a molten pool, thus resistance to burn-through of molten metal can be improved in welding in all positions including a difficult position such as in vertical welding and overhead welding. Excessive addition of Zr increases inclusion, thus the content Zr_{(Wire)} is set to 3.00% by mass or less. The Zr source in the wire includes metal powder of Zr added to the flux, metal powder of alloy containing Zr, a compound containing Zr, and Zr contained in a hoop. When Zr is added using the flux, it is preferable to add in the form of ZrO₂ because this provides the effect of improving the arc blowability, and improving the arc stability even in a low welding current area.

### (Ca_{(Wire)}: 3.00% by mass or less)

Ca is a strong deoxidizing element like Al, and causes an oxidation reaction in the welding metal to produce an oxide in a molten pool, thus resistance to burn-through of molten metal can be improved in welding in all positions including a difficult position such as in vertical welding and overhead welding. Excessive addition of Ca increases inclusion, thus the content Ca_{(Wire)} is set to 3.00% by mass or less. The content Ca is more preferably 1.00% by mass or less, further preferably 0.30% by mass or less, thus defining a lower limit value of Ca_{(Wire)} has no meaning particularly. The Ca source in the wire includes metal powder of Ca added to the flux, metal powder of alloy containing Ca, a compound containing Ca, and Ca contained in a hoop. When Ca is added using the flux, it is preferable to add using fluoride powder of Ca because this can further reduce the amount of oxygen in the welding metal.

### (Fe_{(Wire)} : 10.0% by mass or less)

Fe is a component that improves the ductility of welding metal; however, when the content Fe_{(Wire)} exceeds 10.0% by mass, hot cracking resistance deteriorates. Thus, the content Fe_{(Wire)} in this embodiment is set to 10.0% by mass or less. In the wire in this embodiment, the content Fe_{(Wire)} is preferably 0.1% by mass or more, further preferably 0.5% by mass or more, and preferably 9.0% by mass or less, more preferably 8.0% by mass or less. The Fe source in the wire includes metal powder of Fe added to the flux, metal powder of alloy containing Fe, a compound containing Fe, and Fe contained in a hoop. When Fe is added using the flux, from the viewpoint of being able to improve the amount of weld deposition, it is preferable to add using metal powder of Fe, metal powder of alloy containing Fe, and e.g., Fe-Mn alloy, Fe-Cr alloy, Fe-Mo alloy and Fe-Ti alloy may be mentioned.

### (B_{(Wire)}: 0.10% by mass or less)

B is a component that is segregated at grain boundaries in the welding metal, and has the effect of preventing reduction in drawability due to segregation of hydrogen at grain boundaries, thus may be contained in the wire in this embodiment. However, when excessively contained, hot cracking resistance may decrease. Thus, in the wire in this embodiment, the content B_{(Wire)} is preferably 0.10% by mass or less, more preferably 0.05% by mass or less, further preferably 0.02% by mass or less. From the viewpoint of reducing porosity defect, the wire in this embodiment does not need to contain B, thus the lower limit of the content B_{(Wire)} of the wire in this embodiment is not limited particularly. In other words, the content B_{(Wire)} in the wire of this embodiment may be 0% by mass, may be e.g., 0.005% by mass or more, or may be 0.01% by mass or more. The B source in the wire includes metal powder of B added to the flux, metal powder of alloy containing B, a compound containing B, and B contained in a hoop. The form in which B is added to the flux includes e.g., oxide such as B₂O₃, and Fe-B alloy.

### (REM_{(Wire)}: 0.1% by mass or less)

REM (Rare Earth Metals) indicates rare-earth element, and includes Ce and La. REM has high affinity with S, and also produces the effect of preventing grain boundary segregation of S, and hot cracking due to S. In contrast, since the arc stability is more preferable for a fewer amount of addition of REM_{(Wire)}, in order to meet required cracking resistance and arc stability, the total of components of REM in the wire is preferably 0.1% by mass or less, more preferably 0.05% by mass or less. The REM source in the wire includes metal powder of REM added to the flux, metal powder of alloy containing REM, a compound containing REM, and REM contained in a hoop.

### (Ba_{(Wire)}: 4.00% by mass or less)

Ba contributes to deoxidation effect on the welding metal and improvement of welding workability by being included in the flux mainly as BaF2 which is fluoride. Thus, Ba should be included optionally to obtain the above-mentioned effect. Note that when Ba is excessively added, arc deflection may occur, and welding workability may decrease, thus the content Ba_{(Wire)} is preferably 4.00% by mass or less, and preferably 3.00% by mass or less. When Bs is added to the flux as fluoride, Bs may be substituted by another element such as Sr, thus the lower limit does not need to be set. The Ba source in the wire includes metal powder of Ba added to the flux, metal powder of alloy containing Ba, a compound containing Ba, and Ba contained in a hoop, and it is preferable to add Ba to the flux as fluoride in the form of BaF₂.

### (F_{(Wire)}: 1.00% by mass or less)

F is a component that reduces the hydrogen partial pressure in the arc to prevent intrusion of hydrogen into the welding metal, and may be added to the wire in this embodiment; however, excessive addition of F may increase porosity defect. Thus, when F is contained in the wire in this embodiment, the F_{(Wire)} is set to 1.00% by mass or less, preferably 0.50% by mass or less, more preferably 0.30% by mass or less.

From the viewpoint of reducing porosity defect, the wire in this embodiment does not need to contain F, thus the lower limit of the content of F in the wire in this embodiment is not limited particularly. In other words, the content of F in the wire of this embodiment may be 0% by mass, may be e.g., 0.05% by mass or more, or may be 0.10% by mass or more. The F source in the wire is preferably all originated from fluoride, and may be e.g., BaF₂, SrF₂, Na₃AlF₆, NaF, CaF₂, AlF₃, K₂SiF₆, or MgF₂, and may include one of these, or may include two or more of these.

### (W_{(Wire)}: 5.00% by mass or less)

W is a component that improves the strength of the welding metal; however, an excessive content may decrease hot cracking resistance. Thus, in the wire in this embodiment, the content W_{(Wire)} is preferably 5.00% by mass or less, more preferably 4.50% by mass or less, further preferably 4.00% by mass or less. W may be used optionally for strength adjustment, thus the lower limit does not need to be defined, and when used for improvement of strength, the content W is preferably 1.00% by mass or more, further preferably 1.20% by mass or more, still further preferably 1.50% by mass or more. The W source in the wire includes metal powder of W added to the flux, metal powder of alloy containing W, a compound containing W, and W contained in a hoop.

### (Nb_{(Wire)}: 0.50% by mass or less)

Nb is an element added to Ni-based alloy to improve the strength; however, excessive addition of Nb decreases hot cracking resistance. Thus, the amount of Nb_{(Wire)} content in this embodiment is reduced to 0.50% by mass or less. The amount of content Nb_{(Wire)} in this embodiment is more preferably 0.10% by mass or less, further preferably 0.05% by mass or less. The Nb source in the wire includes metal powder of Nb added to the flux, metal powder of alloy containing Nb, a compound containing Nb, and Nb contained in a hoop. The form of Nb contained in the flux includes e.g., single Nb metal, Fe-Nb alloy, and Nb₂O₅.

### (V_{(Wire)}: 0.050% by mass or less)

When the amount of V in the wire exceeds 0.050% by mass, V combines with Ni to produce low melting point compounds, thus hot cracking resistance may decrease. Therefore, it is preferable that the content V_{(Wire)} in this embodiment be reduced to 0.050% by mass or less.

### (Cu_{(Wire)}: 2.0% by mass or less)

Cu is an element that contributes to improvement of the strength of the welding metal. Cu may be contained in order to meet the strength range required for welding of nickel and nickel alloy. The content Cu_{(Wire)} in the wire is preferably 2.0% by mass or less, more preferably 1.0% by mass or less. The Cu source in the wire includes metal powder of Cu added to the flux, metal powder of alloy containing Cu, a compound containing Cu, and Cu contained in a hoop, and further includes Cu plate on the wire surface.

### (Total of alkali metal: 3% by mass or less)

The alkali metal element serves as an arc stabilizer. The alkali metal in this embodiment is based on metal powder and compounds containing one type or multiple types of alkali metal element. The alkali metal element includes K, Li, Na. The total of contents of alkali metal in the wire indicates the total content of metal powder containing alkali metal elements and alkali metal in the wire converted from compounds. From the viewpoint of adjustability to molten properties preferable for improvement of bead shape, the total of alkali metal in the wire with respect to the entire wire mass is preferably 3% by mass or less, more preferably 2% by mass or less.

### (Ni_{(Wire)}: 45 to 75% by mass)

Ni forms alloys with various types of metal, and imparts excellent mechanical performance and corrosion resistance to the welding metal. If the Ni content of the wire in this embodiment is less than 45% by mass, when the welding metal is diluted, stable austenite organization is not formed. Meanwhile, when the Ni content exceeds 75% by mass, the amount of addition of other alloy elements is insufficient, and the mechanical performance cannot be ensured. Thus, the content of Ni in the wire in this embodiment is set to 45 to 75% by mass. In the wire in this embodiment, the content Ni_{(Wire)} is preferably 47% by mass or more, further preferably 50% by mass or more, and preferably 70% by mass or less, more preferably 65% by mass or less. The Ni source in the wire includes metal powder of Ni added to the flux, metal powder of alloy containing Ni, a compound containing Ni, and Ni contained in a hoop. Metal powder of alloy containing Ni is e.g., Ni-Mo alloy.

### (Residue: O, N and inevitable impurities)

In this embodiment, the residue excluding the above-mentioned elements are preferably O, N and inevitable impurities. The impurities indicate the substances not intentionally added, and include e.g., Sn, Co, Sb, As, Ta as elements not mentioned above. The total of contents of impurities in the wire is preferably 0.5% by mass or less, more preferably 0.3% by mass or less.

The wire containing flux useable in this embodiment is such that the flux is filled in the sheath, and from the viewpoint of availability, and economical aspect, it is preferable that the sheath be formed of a nickel alloy strip.

### <Deposited Metal>

The component ranges in JIS Z 3335:2021 TNi1013 or JIS Z 3335:2021 TNi6275 are preferred. Specifically, in terms of % by mass, it is sufficient that C(METAL): ≤ 0.10%, Si(METAL): ≤ 1.0%, Mn(METAL): ≤ 3.0%, P(METAL): ≤ 0.020%, S(METAL): ≤ 0.015%, Ni(METAL): ≥ 50.0%, Cu(METAL): ≤ 0.5%, Cr(METAL): 4.0 to 16.5%, Fe(METAL): ≤ 10.0%, Mo(METAL): 15.0 to 19.0%, W(METAL): ≤ 2.0 to 4.5%, and other any elements ≤ 0.50% as the residual impurities.

### <Learning Device>

In this embodiment, as described above, at least the setting value or the correction value for the weaving width are calculated based on the values of plate thickness, groove depth or estimate welding metal height, and a molten pool during welding may be observed by a visual sensor or the like, and the welding condition may be further corrected according to the situation of the molten pool.

Which setting value is to be corrected as a welding condition is not particularly limited. For example, the condition for the weaving width may be corrected, and the torch angle may be corrected. In addition, the welding current and the arc voltage and the like may be corrected. Feature points of the molten pool may be extracted to obtain the above-mentioned situation of the molten pool, and the extracting method is not particularly limited. However, from the viewpoint of accuracy of the extraction, it is preferable that feature points be extracted using a learning device. Hereinafter an example in this embodiment will be described.

In the following description related to a learning device, "learning" or "machine learning" refers to generating a "learned model" by conducting learning, using learning data and any learning algorithm. The learned model is updated in a timely manner as the learning progresses using a plurality of pieces of learning data, and even with the same input, the output will vary. Therefore, the learned model is not limited to the state at a specific time. Herein, a model used for learning is referred to as a "learning model", and a learning model that has undergone a certain amount of learning is referred to as a "learned model".

The portable welding robot 100 or the control device 600 may have a learned model. A device that can perform communication with the portable welding robot 100 or the control device 600 may have a learned model. Note that the device that can perform communication is e.g., PC.

A specific example of "learning data" will be described later, and the configuration thereof may be changed depending on the learning algorithm used. When cross-validation is performed, the learning data may include teaching data used for the learning itself, validation data used for validating a learned model, and test data used for testing a learned model. In the following description, when data related to learning is comprehensively shown, the data is referred to as the "learning data", and when data at the time of conducting learning itself is shown, the data is referred to as the "teaching data". Note that it is not intended to clearly classify the teaching data, validation data, and test data which are included in the learning data, and for example, all learning data may be teaching data depending on learning, verification, and testing methods.

Referring to Fig. 1, a configuration example of a system including a learning device is illustrated. In addition to the welding system 50, the system including the learning device includes a visual sensor and a data processing device which are not illustrated.

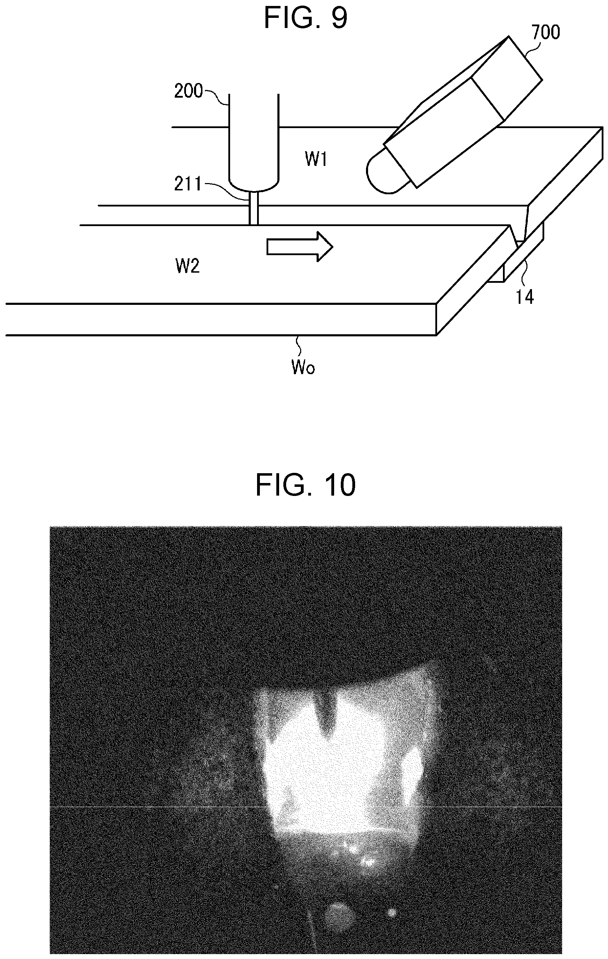

Fig. 9 is a perspective view illustrating an arrangement position of a visual sensor according to the embodiment of the present disclosure. In this embodiment, the work Wo is a butt joint. The work Wo consists of two metal plates W1 and W2 which are butted to each other with an interval of groove. Since vertical position is adopted in this embodiment, a description is given assuming that the welding direction is upward. Note that a backing member 14 made of ceramic is attached to the rear surface side of the two metal plates butted to each other. Note that a metal-based backing member may be used for the rear surface side, or no backing member may be used. Therefore, the material for the backing member is not particularly limited, and may vary depending on the material of the work Wo. In a butt joint, arc welding is performed in one direction along the groove. Hereinafter, the welding travel direction is referred to as the "welding direction". In Fig. 9, the welding travel direction is indicated by an arrow. Thus, the welding torch 200 is located rearward of the visual sensor 700, that is, on the side in the opposite direction to the welding direction.

The work Wo in this embodiment is installed horizontally so that the surface on which welding is performed faces vertically upward. Thus, the portable welding robot 100 welds the work Wo from the upper side of the work Wo. For example, as illustrated in Fig. 9, the visual sensor 700 may be installed diagonally upward with respect to the welding position of the work Wo.

Fig. 10 is a picture illustrating an image captured by the visual sensor, corresponding to the embodiment of the present disclosure. The image capture range of the visual sensor 700 includes the welding position of the work Wo, and an image of the welding position during arc welding is captured. The captured image includes a molten pool, a welding wire, and an arc. The visual sensor 700 in this embodiment can continuously capture a still image of 1024×768 pixels, for example. In other words, the visual sensor 700 can capture welding images as a video image. The resolution of a still image that can be captured by the visual sensor 700 is not particularly limited. For example, when the visual sensor 700 comprises a plurality of cameras, each of the plurality of cameras may obtain a welding image with a different resolution. Also, before a welding image is input to the later-described learned model, preprocessing may be performed such as clipping any feature region from the captured welding image for the purpose of reducing the processing time. Any feature region may be a fixed size range arranged so that a predetermined region is located at the center. The size of any feature region may be changed according to the welding situation.

### <Configuration of Data Processing Device>

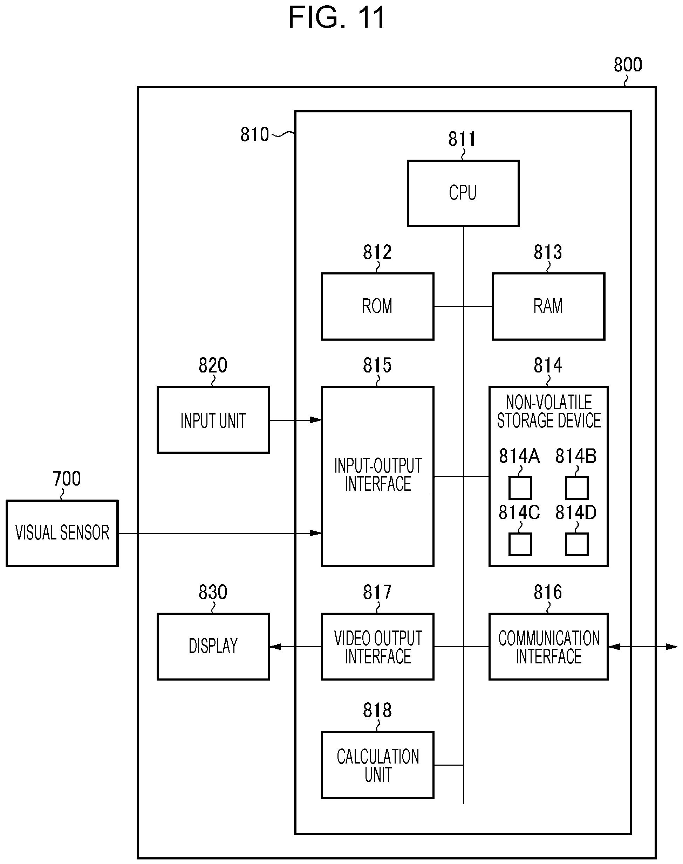

Fig. 11 is a schematic diagram illustrating a configuration example of a data processing device according to the embodiment of the present disclosure. The data processing device 800 is comprised of a computer, for example. The computer includes a body 810, an input unit 820, and a display 830. The body 810 includes a CPU 811, a ROM 812, a RAM 813, a non-volatile storage device 814, an input-output interface 815, a communication interface 816, a video output interface 817, and a calculating unit 818. The CPU 811, the ROM 812, the RAM 813, the non-volatile storage device 814, the input-output interface 815, the communication interface 816, the video output interface 817, and the calculating unit 818 are communicably connected to each other via a bus or a signal line.

The calculating unit 818 may be a program to be executed by the CPU 811. In this case, a program having a function corresponding to the calculating unit 818 is stored in e.g., the non-volatile storage device 814, and the CPU 811 reads and executes the program.

In the non-volatile storage device 814, a learning program 814A that performs deep learning using collected or obtained learning data, a learned model 814B generated through execution of the learning program 814A, information generation program 814C to generate evaluation feature information related to welding using the learned model 814B, and an image data 814D are stored. In addition, an operating system and application programs are also installed in the non-volatile storage device 814.

The data processing device 800 implements various functions through execution of programs by the CPU 811. In this embodiment, the data processing device 800 implements a function of generating a learned model by machine learning, and a function of performing various processes at the time of actual welding by utilizing the learned model. The details of these functions will be described below. Note that the data processing device 800 may be divided according to the function of generating a learned model, and the function of performing control processes based on the information outputted from the learned model at the time of actual welding. From the viewpoint of versatility, the data processing device 800 is preferably divided into a plurality of devices according to its functions. The ROM 812 stores BIOS (Basic Input Output System) and the like to be executed by the CPU 811. The RAM 813 is used as a work area for a program read from the non-volatile storage device 814.

The input-output interface 815 is connected to the input unit 820 that includes a keyboard, and a mouse. The visual sensor 700 is also connected to the input-output interface 815. The image data output from the visual sensor 700 is provided to the CPU 811 via the input-output interface 815. The communication interface 816 is a communication module for wired or wireless communication. The video output interface 817 is connected to the display 830 comprised of e.g., a liquid crystal display or an organic EL (ElectroLuminescence) display, and a video signal corresponding to video data provided from the CPU 811 is output to the display 830.

The data processing device 800 may be integrated with the control device 600.

### <Generation of Learned Model>

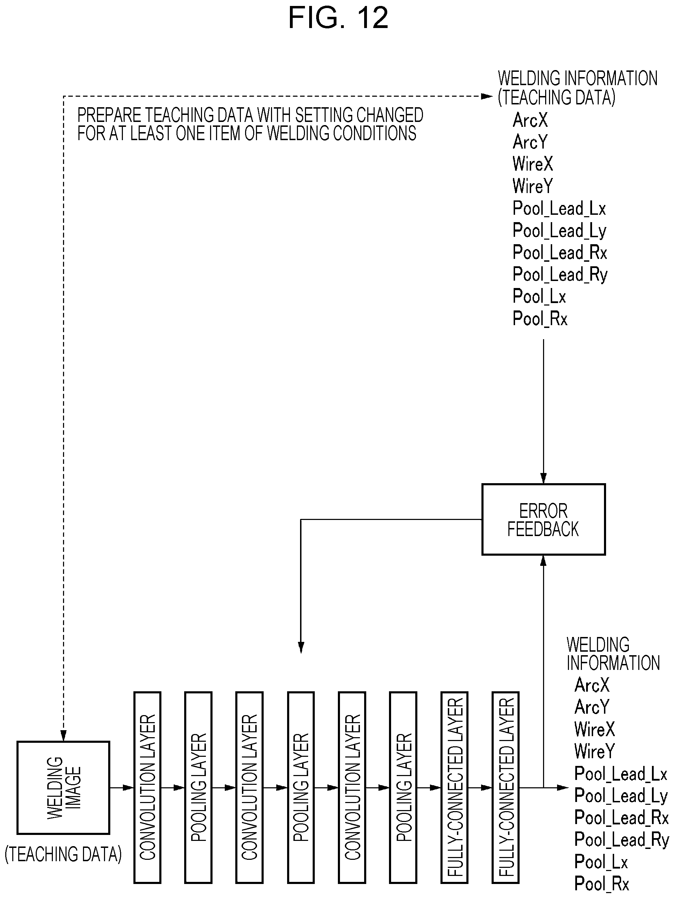

Hereinafter, the feature points extracted from image data and the learned model that extracts the feature points in this embodiment will be described. Fig. 12 is an explanatory diagram for conceptually explaining a process of generating a learned model 814B according to the embodiment of the present disclosure. The learned model 814B in this embodiment is formed by a convolution neural network, and includes a network configuration for stacking one or more stages of a convolution layer and a pooling layer, and fully connecting one or more layers.

In a learning stage, an error is determined based on the output from a fully-connected layer, and the welding information that is teacher data, and a neural network is updated by an error back-propagation method so as to decrease the error, thus a learned model is generated.

The generated learned model 814B receives input of image data output from the visual sensor 700, and outputs feature points related to various pieces of welding information which appears in the image data. In this embodiment, the image data input to the learned model 814B includes at least a molten pool, the welding wire 211, and the arc as the objects (targets), and feature points obtained from each object, or a plurality of objects are extracted. Then, welding information such as arc stability, amount of weld deposition, arc tracking situation or weld penetration degree can be obtained in real time based on the extracted feature points. Note that the image data may be referred to as the "welding image" below.

In this embodiment, as the feature points related to welding information, the distal end (wire distal end) of the welding wire 211, the center point (arc center) of the arc, the positions of distal ends on the right and left of a molten pool, and the positions of the right and left ends of a molten pool. Input of the feature points to be used as the teacher data is made by an operator designating specific positions on the welding image in accordance with the instructions on the operation screen that supports a teaching work.

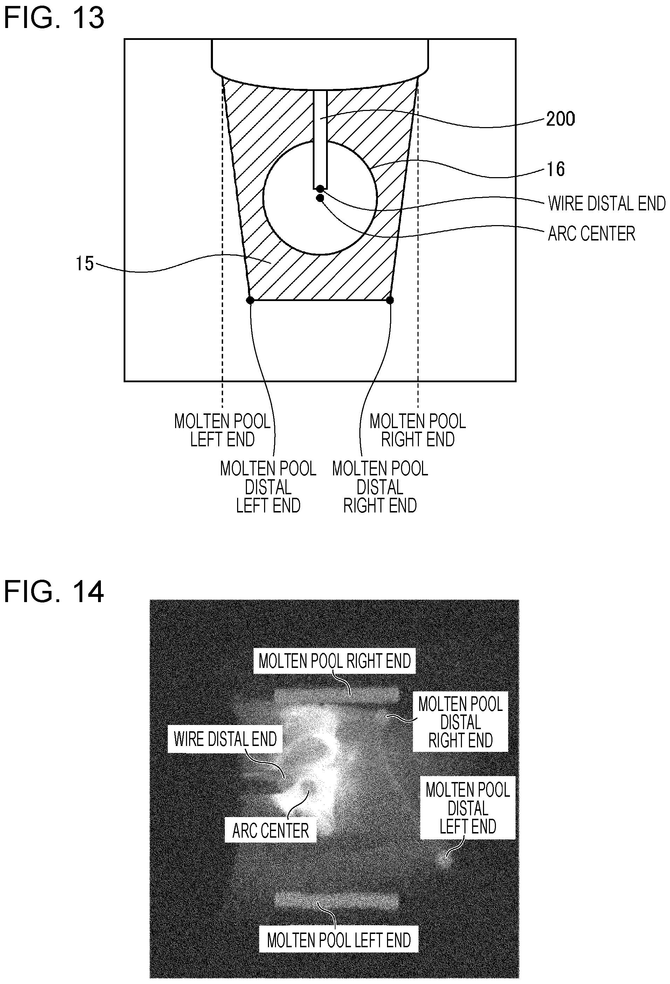

Fig. 13 is a view explaining an example of a screen used for a teaching work, corresponding to the embodiment of the present disclosure. The welding image illustrated in Fig. 13 includes a molten pool 15, a welding wire 211, and an arc 16. In Fig. 12, the molten pool 15 is shown by hatching. Fig. 14 is an explanatory picture illustrating a specific example of a welding image obtained by welding, and an example of welding information in the welding image, corresponding to the embodiment of the present disclosure. Herein, in order to facilitate explanation, the position corresponding to the coordinates indicated by a feature point is drawn on the welding image. Note that as described above, the image has coordinates, and forms a coordinate plane consisting of 2 axes: the X-axis and the Y-axis. In this embodiment, the visual sensor 700 is installed so that the weld line direction and the X-axis direction are parallel, thus in this embodiment, the X-axis direction may be referred to as the weld line direction. The Y-axis direction is a perpendicular direction to the X-axis, in other words, the groove width direction which is perpendicular to the weld line, thus the Y-axis direction may be referred to as the groove width direction. Note that the X-axis along which the portable welding robot 100 in this embodiment moves is the weld line direction, thus the X-axis along which the portable welding robot moves and the X-axis on the welding image are the same direction, and for the Y-axis direction, it can be stated that the Y-axis along which the portable welding robot moves and the Y-axis on the welding image are the same direction.

In this embodiment, as the feature points, the coordinate position (ArcX, ArcY) of the arc center, the coordinate position (WireX, WireY) of the wire distal end, the coordinate position (Pool_Lead_Lx, Pool_Lead_Ly) of the molten pool distal left end, the coordinate position (Pool_Lead_Rx, Pool_Lead_Ry) of the molten pool distal right end, the coordinate position (Pool_Ly) of the molten pool left edge, and the coordinate position (Pool_Ry) of the molten pool right edge are taught by an operator. Input of welding information is made by an operator designating a specific position on the screen. The coordinates which provide the boundary between the welding wire 211 and the arc are an example of position coordinates of the wire distal end. The molten pool distal left end, the molten pool distal right end, the molten pool left edge, and the molten pool right edge are an example of a feature point related to the behavior of the molten pool 15. For example, when the feature points of the molten pool left edge and the molten pool right edge are known, the width of the molten pool 15 can be calculated.

In this embodiment, the difference (hereinafter, referred to as the "LeadX") between either predetermined molten pool distal end position and the position of the wire distal end in the X-direction is calculated, the difference (hereinafter, referred to as the "LeadW") between the sampled time-series data, and the molten pool distal left end and the molten pool distal right end is calculated, and at least two pieces of time-series data from the sampled time-series data may be used. The number of samplings per unit time is not particularly limited.

Among the feature points output from the learning device, the calculating unit 818 uses, for example, the coordinate position (Pool_Lead_Lx, Pool_Lead_Ly) of the molten pool distal left end, the coordinate position (Pool_Lead_Rx, Pool_Lead_Ry) of the molten pool distal right end, and the coordinate position (WireX, WireY) of the wire distal end.

The calculating unit 818 calculates LeadX. For example, when the molten pool distal end position is on the right-end side, the calculating unit 818 calculates LeadX as the difference ("Pool_Lead_Rx" - "WireX") between the coordinate position of the molten pool distal right end, and the coordinate position of the wire distal end in the X-direction.

The calculating unit 818 calculates LeadW. For example, the calculating unit 818 may calculate LeadW as the difference ("Pool_Lead_Ry" - "Pool_Lead_Ly") between the coordinate position of the molten pool distal left end, and the coordinate position of the molten pool distal right end in the Y-direction, or may calculate LeadW as the difference between the coordinate position (Pool_Ly) of the molten pool left edge and the coordinate position (Pool_Ry) of the molten pool right edge.

For LeadX and LeadW which are calculated by the calculating unit 818, the unit to express the distance may be the number of pixels, or this may be converted to any unit such as "mm" and "cm".

The state of the molten pool can be determined by taking the time-series data of LeadX and LeadW, and automatic control can be performed so that any welding condition is corrected according to a result of the determination to maintain a stable state. For example, the control device 600 may monitor the time-series data of LeadX, and at a timing when the value of LeadX exceeds a predetermined threshold value, may determine that the molten pool has expanded, and control to increase the welding speed or tilt the torch angle in a retreating direction so that the arc is brought into contact with the groove.

In this embodiment, as an example, LeadX, LeadW are calculated, and automatic welding is performed based on the time-series data thereof which is not limited to the time-series data of LeadX, LeadW.

### <First Example>

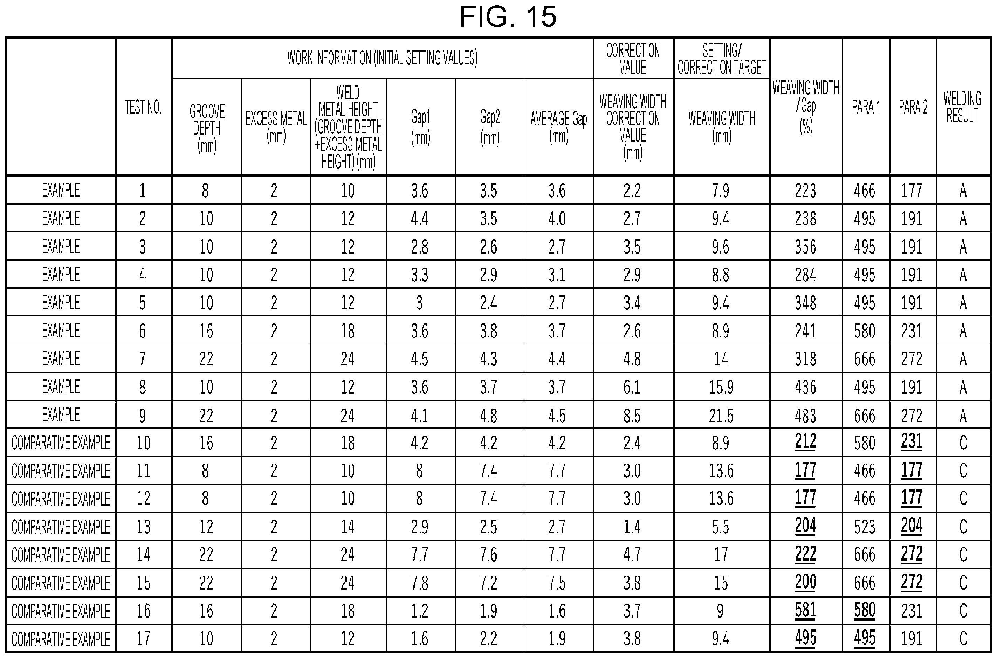

Fig. 15 is a table illustrating a first Example of welding according to the embodiment of the present disclosure.

The first Example shows a result in which when a gap is present, a weaving width was set in accordance with a control method for a welding robot or a control device according to the embodiment of the present disclosure, then welding was actually performed, and an appearance inspection was conducted. Note that the state with a gap present indicates that the gap is larger than the wire diameter of the welding wire.

Implementation conditions are as follows. First, a hastelloy-based wire containing Ni-based flux was used as the welding wire. Mild steel was used for a steel sheet to be welded. The welding position was vertical welding. The welding conditions for current and voltage were such that optimal values were set in a range of welding current: 150 to 200 A, arc voltage: 22 to 30 V, welding speed: 5 to 28 cm/min.

The test numbers 1 to 9 indicate Examples, and the test numbers 10 to 17 indicate Comparative Examples. As work information, numerals of groove depth, excess metal, welding metal height, Gap1, Gap2, average Gap are shown. The unit of each piece of the work information is mm. The welding metal height is the sum of the groove depth and the excess metal height. The value of a gap is obtained by touch sensing at two positions with different depths, and the obtained values were Gap1 and Gap2. The average Gap is the average of Gap1 and Gap2.

In this Example, the average Gap was used as a reference value for calculating a weaving width correction value and the ratio of weaving width/Gap. However, the gaps at the positions in the depth direction, specifically, Gap1 and Gap2 may be used as reference values to calculate the weaving widths at the positions in the depth direction.

The weaving width correction value serving as a correction value, and the weaving width to be set or corrected are shown together. The unit for each of the weaving width correction value and the weaving width is mm.

As a correction value, the weaving width correction value calculated in step S4 of Fig. 8 is shown. The value of the weaving width is obtained by adding twice the weaving width correction value to the average Gap. Note that twice the value of the weaving width correction value is added to the average Gap because weaving is performed not only to one side end of the gap, but also to both ends in an expanding manner. The numerals in Fig. 15 are rounded off to two decimal places. For example, in Example 1, calculation of average Gap + 2×weaving width correction value gives 3.6 + 2×2.2 = 8.0, and it seems there is an error from the written weaving width of 7.9, but this is because of rounding of numbers, and actually calculation has been performed correctly.

The ratio of weaving width/Gap is obtained by dividing the weaving width by average Gap, and multiplying the quotient by 100, where the unit is %.

Para 1 and para 2 are abbreviations of parameter 1 and parameter 2, respectively. Parameter 1 is the value obtained by calculating 14.3×groove depth + 351.5, and the value of parameter 1 gives the first value mentioned above. Parameter 2 is the value obtained by calculating 6.8×groove depth + 122.5, and the value of the parameter 2 gives the second value mentioned above.

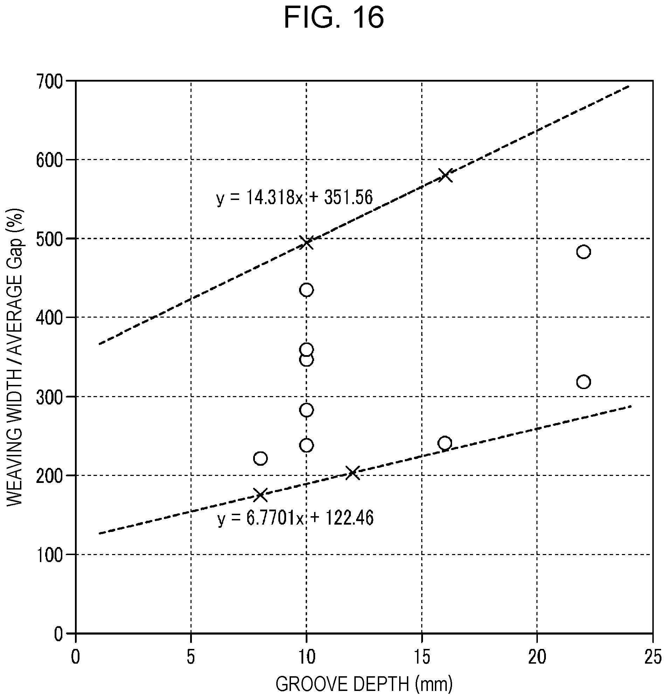

Here, Fig. 16 is referred to. Fig. 16 is a plotted graph corresponding to the embodiment of the present disclosure. In the plotted graph, Examples and Comparative Examples are each plotted, where the horizontal axis indicates groove depth, and the vertical axis indicates weaving width/average Gap. O mark indicates that the welding result is favorable, and × mark indicates that the welding result is not favorable.

The applicant performed welding several times while changing the value of work information many times, for example, as in the test number 1 to the test number 17 of Fig. 15, and checked the result of welding to generate the plotted graph of Fig. 16. As a result, it has been found that O marks are plotted between a lower straight line obtained by connecting × marks on the lower side, and an upper straight line obtained by connecting × marks on the upper side.

The lower straight line is y = 6.7701x + 122.46. The upper straight line is y = 14.318x + 351.56.

Note that x represents the horizontal axis, and y represents the vertical axis.

Returning to Fig. 15, parameter 1 corresponds to the upper straight line. Parameter 2 corresponds to the lower straight line. Note that parameter 1 and parameter 2 are also rounded off to two decimal places.

According to the plotted graph of Fig. 16, when the weaving width/average Gap shown in Fig. 15 is smaller than parameter 1, and larger than parameter 2, welding results plotted with O marks in Fig. 16 can be favorable ones.

Conversely, the numeral of weaving width/average Gap larger than parameter 1, and the numeral of weaving width/average Gap smaller than parameter 2 in Fig. 15 are shown by bold characters with underline.

The welding result of Fig. 15 shows a result of evaluation of welding of each test number in terms of A, B, C. Evaluation A shows that the welding is satisfactory and the bead appearance is favorable. Evaluation B shows that the welding is satisfactory, but the bead appearance is not favorable. Evaluation C shows that the welding is unsatisfactory in the first place.

As is apparent from Fig. 15, for each welding result with evaluation C, the weaving width/average Gap is larger than parameter 1 or smaller than parameter 2. In other words, evaluation relative to parameter 1 and parameter 2 matches the evaluation of the welding result based on the actual tests.

Thus, when a gap is present, in other words, when the gap is larger than the wire diameter of the welding wire, it is preferable to determine the weaving width so that W/G which is the ratio of W denoting weaving width to G denoting gap is lower than or equal to the value of 14.3×A + 351.5 and higher than or equal to the value of 6.8×A + 122.5. Note that A is the value of groove depth, estimated welding metal height - excess metal height, or plate thickness.

In Examples mentioned above, parameter 1 and parameter 2 were calculated based on the "groove depth". However, parameter 1 and parameter 2 may be set based on another value. For example, parameter 1 and parameter 2 may be set based on the "estimated welding metal height - excess metal height". Alternatively, parameter 1 and parameter 2 may be set based on the "plate thickness". Specifically, when the gap is larger than the wire diameter of the welding wire, the weaving width is calculated so that W/G which is the ratio of W denoting weaving width to G denoting gap is lower than or equal to the first value and higher than or equal to the second value. The first value and the second value may be values based on the groove depth. The first value and the second value may be values based on the estimated welding metal height - excess metal height. The first value and the second value may be values based on the plate thickness.

### <Second Example>

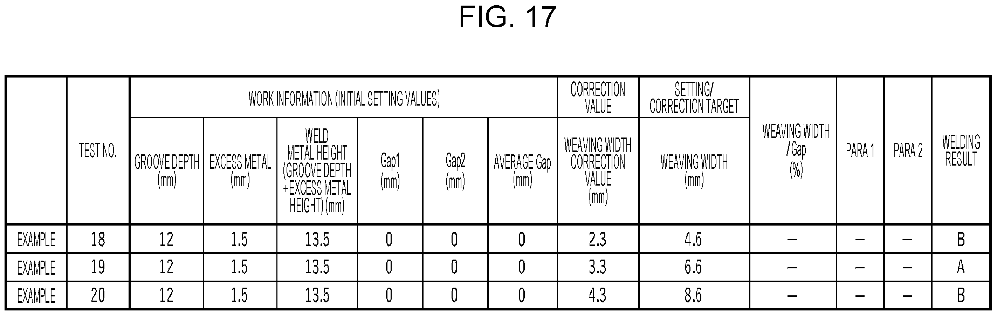

Fig. 17 is a table illustrating a second Example of welding according to the embodiment of the present disclosure.

The second Example shows a result in which when the value of the gap is set to 0, that is, when no gap is present, a weaving width is set in accordance with a control method for a welding robot or a control device according to the embodiment of the present disclosure, then welding was actually performed, and an appearance inspection was conducted. Note that when the gap is smaller than the wire diameter of the welding wire, the value of the gap is set to 0.

The implementation condition is the same as that of the first Example.

Test numbers from 18 to 20 indicate Examples. The definition of each column of Fig. 17 is the same as in Fig. 15, thus a detailed description is omitted.

Since no gap is present, the values of Gap1, Gap2 and average Gap are set to 0. Thus, the ratio of weaving width/Gap is division by 0 which makes no sense, thus is not listed. Parameter 1 and parameter 2 to be compared with the ratio of weaving width/Gap are also not listed.

The welding result shows that test numbers 18 and 20 had evaluation B, and test number 19 had evaluation A.

Based on Fig. 17, when no gap is present, in other words, when the gap is smaller than the wire diameter of the welding wire, it is preferable to determine the weaving width based on a predetermined value in the amplitude DB.

As described above, the present specification discloses the following matters.
(1) A control method for a welding robot or a control device related to GMAW in which a workpiece is provided with a groove, the workpiece and a welding wire are different in composition, and the welding wire contains 5% or more of Ni, the method comprising:
   a work information setting process of setting work information including at least one of a plate thickness, a groove depth or an estimated welding metal height, and at least one of a gap or a groove width at a central position of a pre-calculated layer height; and
   a welding condition setting correction process of calculating a weaving width based on the work information before welding or during welding, and setting or correcting welding conditions including at least the weaving width.
   With this configuration, even when a GMAW method having a high deposition efficiency is used for welding in which the workpiece and the welding wire are different in composition, and the welding wire contains 5% or more of Ni, an excellent welding quality can be obtained.
(2) The control method according to (1),
   wherein DB that defines at least one or more threshold values, and a weaving width correction value for each of the threshold values or for each of adjacent ones of the threshold values, is pre-stored in a storage device,
   in the welding condition setting correction process,
   the weaving width correction value is extracted from the DB based on at least one of values of the plate thickness, the groove depth, or the estimated welding metal height of the work information, and the threshold values, and
   the weaving width is calculated based on a value of the gap or a value of the groove width at the central position of the pre-calculated layer height determined in the determination step, and the weaving width correction value.
   With this configuration, the weaving width can be corrected using the pre-stored correction value.
(3) The control method according to (2),
   wherein calculation of the weaving width includes at least one of addition, subtraction or multiplication between the value of the gap or the groove width at the central position of the pre-calculated layer height, and the weaving width correction value.
   With this configuration, the weaving width can be calculated flexibly using one of addition, subtraction and multiplication between the gap or the groove width at the central position of the pre-calculated layer height, and the weaving width correction value.
(4) The control method according to any one of (1) to (3), further comprising
   a sensing process of detecting work information before welding,
   wherein in the sensing process, at least one value selected from values of the plate thickness, the groove depth, a welding length, a groove angle, and the gap of the work information is calculated based on a detection result of sensing, and
   the calculated value is determined as a setting value set in the work information setting process.
   With this configuration, sensing such as touch sensing may be performed, and work information can be set from the sensing result, thus it is easy to cope with welding of various steel sheets.
(5) The control method according to any one of (1) to (4),
   wherein in the welding condition setting correction process,
   at least a condition for torch angle is set or corrected as one of the welding conditions based on the work information.
   With this configuration, the arc can be controlled to reach a steel sheet by setting the torch angle.
(6) The control method according to (5),
   wherein when welding position in the work information is vertical, the condition for torch angle is set or corrected within a range of a trailing angle.
   With this configuration, the arc can be controlled to reach a steel sheet by setting the torch angle downward, that is, to a trailing angle.
(7) The control method according to any one of (1) to (6), further comprising
   a welding phenomenon information acquisition process of acquiring welding phenomenon information during welding by a sensor,
   wherein in the welding condition setting correction process, the welding conditions are set or corrected based on the acquired welding phenomenon information.
   With this configuration, further appropriate welding can be performed by updating the welding conditions during welding based on the acquired welding phenomenon information.
(8) The control method according to (7),
   wherein the welding robot, the control device, or a device capable of communicating with the welding robot or the control device has a learned model which has been generated to use the welding phenomenon information as input data, and output feature information acquired from the welding phenomenon information,
   in the welding condition setting correction process, a welding condition is set or corrected based on the feature information output from the learned model in response to input of the welding phenomenon information.
   With this configuration, the welding conditions can be automatically set by utilizing the learned model.
(9) A control device for controlling a welding robot related to GMAW in which a workpiece is provided with a groove, the workpiece and a welding wire are different in composition, and the welding wire contains 5% or more of Ni, the control device comprising:
   a work information setting function of setting work information including at least one of a plate thickness, a groove depth or an estimated welding metal height, and at least one of a gap or a groove width at a central position of a pre-calculated layer height; and
   a welding condition setting correction function of calculating a weaving width based on the work information before welding or during welding, and setting or correcting welding conditions including at least the weaving width.
   With this configuration, even when a GMAW method having a high deposition efficiency is used for welding in which the workpiece and the welding wire are different in composition, and the welding wire contains 5% or more of Ni, an excellent welding quality can be obtained.
(10) A welding system for controlling a welding robot related to GMAW in which a workpiece is provided with a groove, the workpiece and a welding wire are different in composition, and the welding wire contains 5% or more of Ni, the welding system comprising
   at least a control device and a welding power supply,
   wherein the control device includes:
      a work information setting function of setting work information including at least one of a plate thickness, a groove depth or an estimated welding metal height, and at least one of a gap or a groove width at a central position of a pre-calculated layer height; and
      a welding condition setting correction function of calculating a weaving width based on the work information before welding or during welding, and setting or correcting welding conditions including at least the weaving width.
      With this configuration, even when a GMAW method having a high deposition efficiency is used for welding in which the workpiece and the welding wire are different in composition, and the welding wire contains 5% or more of Ni, an excellent welding quality can be obtained.
(11) A control program for controlling a welding robot related to GMAW in which a workpiece is provided with a groove, the workpiece and a welding wire are different in composition, and the welding wire contains 5% or more of Ni, the control program comprising:
   a work information setting function of setting work information including at least one of a plate thickness, a groove depth or an estimated welding metal height, and at least one of a gap or a groove width at a central position of a pre-calculated layer height; and
   a welding condition setting correction function of calculating a weaving width based on the work information before welding or during welding, and setting or correcting welding conditions including at least the weaving width.
   With this configuration, even when a GMAW method having a high deposition efficiency is used for welding in which the workpiece and the welding wire are different in composition, and the welding wire contains 5% or more of Ni, an excellent welding quality can be obtained.
(12) A welding method related to GMAW in which a workpiece is provided with a groove, the workpiece and a welding wire are different in composition, and the welding wire contains 5% or more of Ni, the welding method comprising:
   a work information setting process of setting work information including at least one of a plate thickness, a groove depth or an estimated welding metal height, and at least one of a gap or a groove width at a central position of a pre-calculated layer height; and
   a welding condition setting correction process of calculating a weaving width based on the work information before welding or during welding, and setting or correcting welding conditions including at least the weaving width,
   wherein in the welding condition setting correction process,
   when a value of the gap or a value of the groove width at the central position of the pre-calculated layer height is smaller than a wire diameter of the welding wire, a weaving width is calculated based on a pre-set value, and
   when the value of the gap or the value of the groove width at the central position of the pre-calculated layer height is larger than the wire diameter of the welding wire, the weaving width is calculated so that W/G is lower than or equal to a first value and higher than or equal to a second value, the W/G being a ratio of W indicating the weaving width to G indicating the value of the gap or the value of the groove width at the central position of the pre-calculated layer height,
   where the first value and the second value are values based on the groove depth, the estimated welding metal height - an excess metal height, or the plate thickness.
   With this configuration, even when a GMAW method having a high deposition efficiency is used for welding in which the workpiece and the welding wire are different in composition, and the welding wire contains 5% or more of Ni, an excellent welding quality can be obtained.
(13) The welding method according to (12),
   wherein when welding position in the work information is vertical,
   in the welding condition setting correction process, at least a condition for torch angle is set or corrected within a range of a trailing angle as one of the welding conditions.
   With this configuration, when the welding position is vertical, the arc can be controlled to reach a steel sheet by setting the torch angle downward, that is, to a trailing angle.
(14) The welding method according to (12) or (13),
   wherein let A be the groove depth, the estimated welding metal height - the excess metal height, or the plate thickness, then
   the first value is 14.3×A + 351.5, and
   the second value is 6.8×A + 122.5.
   With this configuration, even when a GMAW method having a high deposition efficiency is used for welding in which the workpiece and the welding wire are different in composition, and the welding wire contains 5% or more of Ni, an excellent welding quality can be obtained.

Although various embodiments have been described above with reference to the drawings, it is needless to say that the present disclosure is not limited to those examples. It is apparent that various modification examples and alteration examples will occur to those skilled in the art within the scope described in the appended claims, and it should be understood that those examples naturally fall within the technical scope of the present disclosure. In a range without departing from the spirit of the disclosure, the components in the above embodiments may be combined in any manner.

The order of execution of processes such as the operations, procedures, steps, and stages in the device, system, program, and method which are shown in the claims, the specification, and the drawings is not particularly clarified like "before", "preceding", and the processes can be executed in any order unless the output of a previous process is used by a subsequent process. Even if the operation flows in the claims, the specification, and the drawings are described using "first", "next" etc., for the sake of convenience, it is not meant that operations are required to be carried out in this order.

The present application is based on Japanese Patent Application (No. 2022-071120) filed on April 22, 2022, the entire contents of which are incorporated herein by reference.

### Industrial Applicability

The present disclosure is useful for a control method, a control device, a welding system, a control program, and a welding method that are capable of achieving an excellent welding quality even when a GMAW method having a high deposition efficiency is used for welding in which a workpiece and a welding wire are different in composition.

### Reference Signs List

- 10: groove

- 14: backing member
- 15: molten pool
- 16: arc
- 50: welding system
- 100: portable welding robot
- 110: robot body
- 112: body part
- 113: slide supporter
- 114: fixed arm part
- 116: welding torch rotation drive unit
- 120: guide rail
- 130: torch connector
- 132,: 134 torch clamp
- 140: member
- 150: cable clamp
- 160: both-side handle
- 168: rotation shaft
- 169: sliding table
- 169a: long groove
- 170: crank
- 171: linkage pin
- 172: securing pin
- 180: approximate straight line movable mechanism
- 181: X-axis movable mechanism
- 182: Y-axis movable mechanism
- 183: Z-axis movable mechanism
- 200: welding torch
- 210: nozzle
- 211: welding wire
- 300: feeding device
- 400: welding power supply
- 410, 430: power cable
- 420: conduit tube
- 500: shielding gas supply source
- 510: gas tube
- 600: control device
- 601: data holding unit
- 602: groove shape information calculating unit
- 603: welding condition acquisition unit
- 604: control unit
- 610: robot control cable
- 620: power supply control cable
- 700: visual sensor
- 800: data processing device
- 810: body
- 814: non-volatile storage device
- 814A: learning program
- 814B: model
- 814C: information generation program
- 814D: image data
- 815: input-output interface
- 816: communication interface
- 817: video output interface
- 818: calculating unit
- 820: input unit
- 830: display

## Claims

1. A control method for a welding robot or a control device related to GMAW in which a workpiece is provided with a groove, the workpiece and a welding wire are different in composition, and the welding wire contains 5% or more of Ni, the method comprising:
a work information setting process of setting work information including at least one of a plate thickness, a groove depth or an estimated welding metal height, and at least one of a gap or a groove width at a central position of a pre-calculated layer height; and
a welding condition setting correction process of calculating a weaving width based on the work information before welding or during welding, and setting or correcting welding conditions including at least the weaving width.

2. The control method according to claim 1,
wherein DB that defines at least one or more threshold values, and a weaving width correction value for each of the threshold values or for each of adjacent ones of the threshold values, is prestored in a storage device,
in the welding condition setting correction process,
the weaving width correction value is extracted from the DB based on at least one of values of the plate thickness, the groove depth, or the estimated welding metal height of the work information, and the threshold values, and
the weaving width is calculated based on a value of the gap or a value of the groove width at the central position of the pre-calculated layer height determined in the determination step, and the weaving width correction value.

3. The control method according to claim 2,
wherein calculation of the weaving width includes at least one of addition, subtraction or multiplication between the value of the gap or the groove width at the central position of the pre-calculated layer height, and the weaving width correction value.

4. The control method according to any one of claims 1 to 3, further comprising
a sensing process of detecting work information before welding,
wherein in the sensing process, at least one value selected from values of the plate thickness, the groove depth, a welding length, a groove angle, and the gap of the work information is calculated based on a detection result of sensing, and
the calculated value is determined as a setting value set in the work information setting process.

5. The control method according to any one of claims 1 to 3,
wherein in the welding condition setting correction process,
at least a condition for torch angle is set or corrected as one of the welding conditions based on the work information.

6. The control method according to claim 5,
wherein when welding position in the work information is vertical, the condition for torch angle is set or corrected within a range of a trailing angle.

7. The control method according to any one of claims 1 to 3, further comprising
a welding phenomenon information acquisition process of acquiring welding phenomenon information during welding by a sensor,
wherein in the welding condition setting correction process, the welding conditions are set or corrected based on the acquired welding phenomenon information.

8. The control method according to claim 7,
wherein the welding robot, the control device, or a device capable of communicating with the welding robot or the control device has a learned model which has been generated to use the welding phenomenon information as input data, and output feature information acquired from the welding phenomenon information,
in the welding condition setting correction process, a welding condition is set or corrected based on the feature information output from the learned model in response to input of the welding phenomenon information.

9. A control device for controlling a welding robot related to GMAW in which a workpiece is provided with a groove, the workpiece and a welding wire are different in composition, and the welding wire contains 5% or more of Ni, the control device comprising:
a work information setting function of setting work information including at least one of a plate thickness, a groove depth or an estimated welding metal height, and at least one of a gap or a groove width at a central position of a pre-calculated layer height; and
a welding condition setting correction function of calculating a weaving width based on the work information before welding or during welding, and setting or correcting welding conditions including at least the weaving width.

10. A welding system for controlling a welding robot related to GMAW in which a workpiece is provided with a groove, the workpiece and a welding wire are different in composition, and the welding wire contains 5% or more of Ni, the welding system comprising
at least a control device and a welding power supply,
wherein the control device includes:
a work information setting function of setting work information including at least one of a plate thickness, a groove depth or an estimated welding metal height, and at least one of a gap or a groove width at a central position of a pre-calculated layer height; and
a welding condition setting correction function of calculating a weaving width based on the work information before welding or during welding, and setting or correcting welding conditions including at least the weaving width.

11. A control program for controlling a welding robot related to GMAW in which a workpiece is provided with a groove, the workpiece and a welding wire are different in composition, and the welding wire contains 5% or more of Ni, the control program comprising:
a work information setting function of setting work information including at least one of a plate thickness, a groove depth or an estimated welding metal height, and at least one of a gap or a groove width at a central position of a pre-calculated layer height; and
a welding condition setting correction function of calculating a weaving width based on the work information before welding or during welding, and setting or correcting welding conditions including at least the weaving width.

12. A welding method related to GMAW in which a workpiece is provided with a groove, the workpiece and a welding wire are different in composition, and the welding wire contains 5% or more of Ni, the welding method comprising:
a work information setting process of setting work information including at least one of a plate thickness, a groove depth or an estimated welding metal height, and at least one of a gap or a groove width at a central position of a pre-calculated layer height; and
a welding condition setting correction process of calculating a weaving width based on the work information before welding or during welding, and setting or correcting welding conditions including at least the weaving width,
wherein in the welding condition setting correction process,
when a value of the gap or a value of the groove width at the central position of the pre-calculated layer height is smaller than a wire diameter of the welding wire, a weaving width is calculated based on a pre-set value, and
when the value of the gap or the value of the groove width at the central position of the pre-calculated layer height is larger than the wire diameter of the welding wire, the weaving width is calculated so that W/G is lower than or equal to a first value and higher than or equal to a second value, the W/G being a ratio of W indicating the weaving width to G indicating the value of the gap or the value of the groove width at the central position of the pre-calculated layer height,
where the first value and the second value are values based on the groove depth, the estimated welding metal height - an excess metal height, or the plate thickness.

13. The welding method according to claim 12,
wherein when welding position in the work information is vertical,
in the welding condition setting correction process, at least a condition for torch angle is set or corrected within a range of a trailing angle as one of the welding conditions.

14. The welding method according to claim 12 or 13,
wherein let A be the groove depth, the estimated welding metal height - the excess metal height, or the plate thickness, then
the first value is 14.3×A + 351.5, and
the second value is 6.8×A + 122.5.
